# EUROPEAN PATENT APPLICATION

(11) **EP 4 318 980 A1**
(43) Date of publication of application: **07.02.2024**
(21) Application number: 22779415.3
(22) Date of filing: 20.01.2022
(51) Int. Cl.: H04B 13/00, G04G 19/00, H02J 50/10

(54) **POWER TRANSMITTER, POWER TRANSMITTING/RECEIVING DEVICE, HUMAN-BODY COMMUNICATION DEVICE, AND POWER TRANSMITTING/RECEIVING SYSTEM**

(30) Priority: 31.03.2021 JP 2021060267
(71) Applicant: Sony Group Corporation, Tokyo 108-0075 (JP); Sony Semiconductor Solutions Corporation, Atsugi-shi, Kanagawa 243-0014 (JP)
(72) Inventor: YOSHINO, Yoshitaka, Atsugi-shi, Kanagawa 243-0014 (JP); SHIGA, Fumiko, Tokyo 108-0075 (JP); IMAI, Tadashi, Atsugi-shi, Kanagawa 243-0014 (JP); IWASAKI, Masanori, Tokyo 108-0075 (JP); YOSHIMURA, Tsukasa, Tokyo 108-0075 (JP); HIRABAYASHI, Takayuki, Atsugi-shi, Kanagawa 243-0014 (JP)
(74) Representative: D Young & Co LLP
(86) International application number: PCT/JP2022/001921
(87) International publication number: WO 2022/209185

(57) **Abstract**

A power transmitter according to an embodiment of the present technology includes an antenna unit and a signal generation circuit. The antenna unit includes a first antenna conductor used in contact with a human body unconnected to ground of earth, and a second antenna conductor that is capacitively coupled to the ground of the earth without being brought into contact with the human body. The signal generation circuit applies an alternating current power signal between the first antenna conductor and the second antenna conductor.

## Description

### Technical Field

The present technology relates to a power transmitter, a power transmission/reception device, a human body communication device, and a power transmission/reception system for supplying power to a device attached to a human body.

### Background Art

Conventionally, a technology for taking power via a human body has been developed. For example, Patent Literature 1 has described a power supply device for taking energy of radio waves traveling in the air via the human body. This power supply device includes an antenna terminal for contact with the human body. The contact of the antenna terminal with the human body allows the human body to act as a virtual antenna. A matching unit performs impedance matching on power of an AC waveform output from the antenna terminal. Then, a rectifying unit rectifies and supplies it to a secondary cell or electric load as power of a DC waveform (paragraphs [0023], [0026], [0074], and [0078] in specification, Figs. 13 and 14, etc. of Patent Literature 1).

### Citation List

### Patent Literature

Patent Literature 1: Japanese Patent Application Laid-open No. 2003-88005

### Disclosure of Invention

### Technical Problem

Taking power through a human body as described above allows driving of a variety of devices attached to the human body, for example. Such devices will be spread widely in future. It is thus desirable to provide a technology of efficiently supplying power via a human body.

In view of the above-mentioned circumstances, it is an object of the present technology to provide a power transmitter, a power transmission/reception device, a human body communication device, and a power transmission/reception system that are capable of efficiently supplying power via a human body.

### Solution to Problem

In order to accomplish the above-mentioned object, a power transmitter according to an embodiment of the present technology includes an antenna unit and a signal generation circuit.

The antenna unit includes a first antenna conductor used in contact with a human body unconnected to ground of earth, and a second antenna conductor that is capacitively coupled to the ground of the earth without being brought into contact with the human body.

The signal generation circuit applies an alternating current power signal between the first antenna conductor and the second antenna conductor.

This power transmitter includes the first antenna conductor that is brought into contact with the human body and the second antenna conductor that is not brought into contact with the human body in a state in which the human body is unconnected to the ground of the earth. The second antenna conductor of them is capacitively coupled to the ground of the earth. Therefore, the human body is a conductor capable of transmitting the alternating current power. In this state, the alternating current power signal is applied to each antenna conductor. This allows efficient power supply via the human body.

The first antenna conductor may be a conductor electrode including at least one of gold, silver, aluminum, copper, iron, nickel, an alloy, an electrically conductive resin, or an electrically conductive rubber and is brought into contact with the human body.

The conductor electrode may have a resin-coated surface that is brought into contact with the human body.

The conductor electrode may be an electrode in a planer shape, a pin shape, a hemisphere shape, or a convexo-concave shape.

The power transmitter may be housed in a casing having a portion other than the conductor electrode, the portion being brought into contact with the human body and being constituted by an insulative member.

The second antenna conductor may be any one of a ground pattern provided in a circuit board of the power transmitter, another pattern provided in the circuit board other than the ground pattern, or an electrically conductive member provided in a portion of the casing housing the power transmitter, the portion being not brought into contact with the human body.

The power signal may be a pulse signal or a sinusoidal signal.

The power signal may be set to have a frequency at which electric charge is easily induced on the human body.

The signal generation circuit may generate the power signal in accordance with a control signal output from a controller that controls power transmission of the power transmitter.

The control signal may be at least one of a signal specifying on/off of the power signal or a signal specifying a frequency of the power signal.

The power transmitter may be mounted on either a portable device that is brought into contact with the human body or a stationary device that is brought into contact with the human body.

A power transmission/reception device according to an embodiment of the present technology, on which the above-mentioned power transmitter is mounted, includes a power receiver and a switching circuit.

The power receiver includes a rectifier circuit connected to the first antenna conductor and receives alternating current power generated in the antenna unit and rectified by the rectifier circuit.

The switching circuit switches and connects the antenna unit to either one of the signal generation circuit and the rectifier circuit.

The power transmission/reception device may further include a power storage element that stores power rectified by the rectifier circuit. In this case, the signal generation circuit may generate the power signal by using the power storage element as a power source.

A human body communication device according to an embodiment of the present technology on which the above-mentioned power transmitter is mounted, includes a communication unit and a separation circuit.

The communication unit is connected to the antenna unit and performs human body communication.

The separation circuit includes a first path that connects the antenna unit and the signal generation circuit and allows a signal having a frequency lower than a frequency for the human body communication to pass and a second path that connects the antenna unit and the communication unit and allows a signal having the frequency for the human body communication to pass.

The signal generation circuit generates the power signal having a frequency lower than the frequency for the human body communication.

A power transmission/reception system according to an embodiment of the present technology includes at least one power transmitter and at least one power receiver.

The at least one power transmitter includes an antenna unit including a first antenna conductor used in contact with a human body unconnected to ground of earth and a second antenna conductor that is capacitively coupled to the ground of the earth without being brought into contact with the human body, and a signal generation circuit that applies an alternating current power signal between the first antenna conductor and the second antenna conductor.

The at least one power receiver receives power depending on an electrical signal via the human body.

The power transmission/reception system may further include a controller that controls power transmission of the at least one power transmitter.

The controller may set on/off of the power signal output from the power transmitter in accordance with a status of a device on which at least one of the power transmitter or the power receiver is mounted or a status of the human body.

The controller may set the frequency of the power signal on the basis of a spectrum of a power waveform induced on the human body.

### Brief Description of Drawings

[Fig. 1] A block diagram showing a functional configuration example of a power transmission/reception system according to a first embodiment of the present technology.
[Fig. 2] A schematic diagram for describing power transmission of the power transmission/reception system via a human body.
[Fig. 3] A schematic diagram showing an example of a plan configuration and a cross-sectional configuration of the power transmission device.
[Fig. 4] A schematic diagram showing a configuration example of a circuit board.
[Fig. 5] A schematic diagram showing another configuration example of the circuit board.
[Fig. 6] A schematic diagram showing an example of a plan configuration and a cross-sectional configuration of a power reception device.
[Fig. 7] A circuit diagram showing an example of a rectifier circuit mounted on the power reception device.
[Fig. 8] A schematic diagram for describing an operation of antenna units on transmission and reception sides.
[Fig. 9] A graph showing a waveform of power induced on the human body.
[Fig. 10] A block diagram showing functional configuration examples of a power transmission/reception device.
[Fig. 11] A schematic diagram outlining a power transmission/reception system according to a second embodiment.
[Fig. 12] A block diagram showing functional configuration examples of a power transmission device that performs human body communication.
[Fig. 13] A block diagram showing functional configuration examples of a power reception device that performs human body communication.
[Fig. 14] A block diagram showing functional configuration examples of a power transmission/reception device that performs human body communication.
[Fig. 15] A schematic diagram showing an application example of power transmission/reception involving the human body communication.
[Fig. 16] A block diagram showing a configuration example of a power transmission/reception system according to a third embodiment.
[Fig. 17] A schematic diagram showing an operation of the power transmission/reception system shown in Fig. 16.
[Fig. 18] A block diagram showing an application example of the power transmission/reception system.
[Fig. 19] A block diagram showing another application example of the power transmission/reception system.
[Fig. 20] A block diagram showing another application example of the power transmission/reception system.
[Fig. 21] A block diagram showing another application example of the power transmission/reception system.

### Mode(s) for Carrying Out the Invention

Hereinafter, embodiments according to the present technology will be described with reference to the drawings.

### <First Embodiment>

### [Outline of Power Transmission/Reception System]

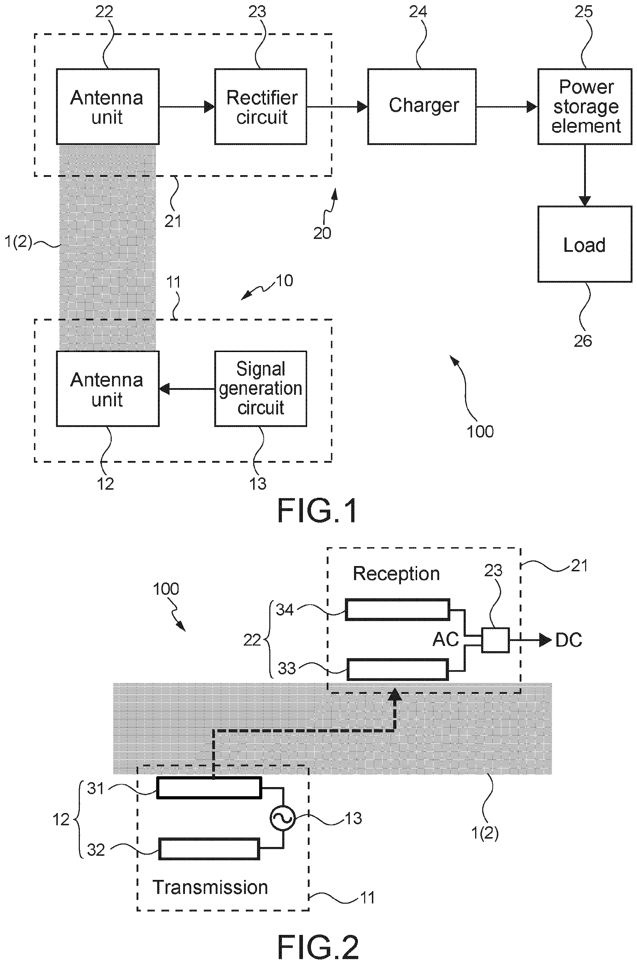

Fig. 1 is a block diagram showing functional configuration examples of a power transmission/reception system 100 according to a first embodiment of the present technology.

The power transmission/reception system 100 is a system for transmitting and receiving power via a human body 2 of a user 1. Thus, the human body 2 functions as a power transmission medium in this system.

The power transmission/reception system 100 includes a power transmission device 10 and a power reception device 20. The power transmission device 10 is a device including a power transmitter 11 (power transmission unit) that transmits power via the human body 2. Moreover, the power reception device 20 is a device including a power receiver 21 (power reception unit) that receives power via the human body 2.

The power transmission device 10 and the power reception device 20 are configured as portable devices that are brought into contact with the human body 2, for example. For example, incorporating the power transmitter 11 or the power receiver 21 in a user interface (UI) device such as a wearable device worn and used by the user 1 can configure the power transmission device 10 or the power reception device 20. In addition, for example, a dedicated device for transmitting/receiving power may be used.

The power transmission/reception system 100 transmits and receives power in a state in which the human body 2 is unconnected to ground of earth (earth ground). For example, it is assumed that the user 1 stands in shoes on the earth (e.g., ground or floor). In this case, the human body 2 is unconnected to the earth ground, and the potential of the human body 2 is electrically unconnected to the earth ground. In this case, power generated in the human body 2 is prevented from escaping to the earth ground, and the power can be efficiently transmitted and received.

The number of power transmission devices 10 and the number of power reception devices 20, which are provided in the power transmission/reception system 100, are not limited. For example, a plurality of power reception devices 20 may be used for a single power transmission device 10. Moreover, for example, a single power reception device 20 may be used for a plurality of power transmission devices 10. As a matter of course, a plurality of power transmission devices 10 and a plurality of power reception devices 20 may be used. The power transmission/reception system 100 is thus constituted by at least one power transmission device 10 (power transmitter 11) and at least one power reception device 20 (power receiver 21).

Moreover, the type, form, and the like of the power transmission device 10 and the power reception device 20 are not limited as long as they can be brought into contact with the human body 2 of the user 1.

For example, the power transmission device 10 may be configured as a stationary device and the power reception device 20 may be configured as a portable device. On the contrary, the power transmission device 10 may be configured as a portable device and the power reception device 20 may be configured as a stationary device. In either case, the contact of the user 1 with the stationary device can supply power from the power transmission device 10 to the power reception device 20 via the human body 2 of the user 1.

As shown in Fig. 1, the power transmission device 10 includes an antenna unit 12, a signal generation circuit 13, and a power supply unit (not shown).

The antenna unit 12 functions as a transmission antenna for transmitting power via the human body 2.

The signal generation circuit 13 generates an AC power signal and outputs the AC power signal to the antenna unit 12.

The power supply unit supplies power for driving the signal generation circuit 13 (power of power signal).

In the present embodiment, the antenna unit 12 and the signal generation circuit 13 constitute the power transmitter 11.

In addition, the power transmission device 10 includes, as appropriate, a control unit that controls the operation of the signal generation circuit 13, a communication unit for communicating with other devices, or the like.

The power reception device 20 includes an antenna unit 22, a rectifier circuit 23, a charger 24, a power storage element 25, and a load 26.

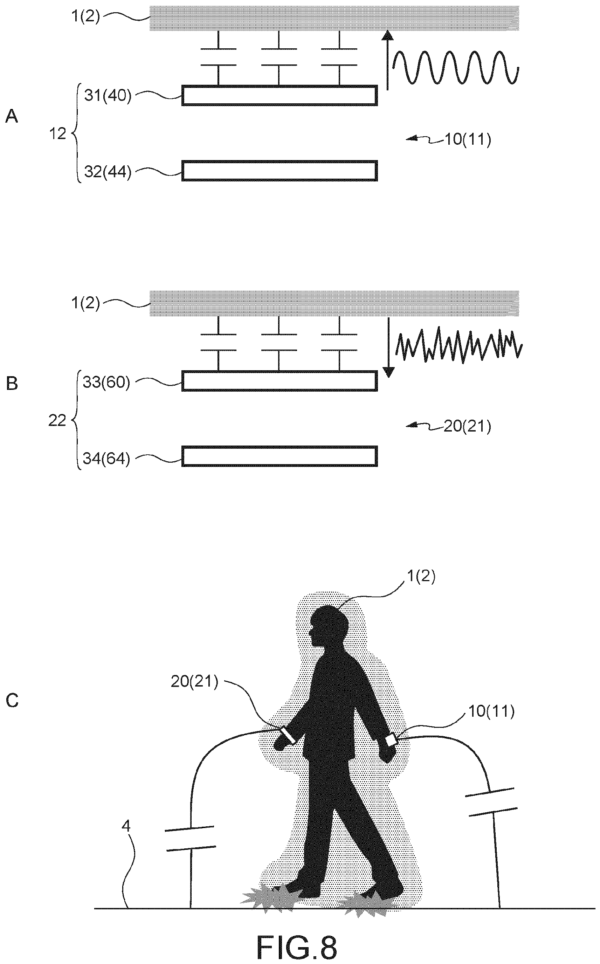

The antenna unit 22 functions as a reception antenna for receiving power via the human body 2. For example, the antenna unit 22 receives power generated in the human body 2 in accordance with the above-mentioned power signal. Moreover, the antenna unit 22 receives radio waves or electric field energy of a quasi-electrostatic field in a surrounding space of the human body 2 as the power. This point will be described later in detail with reference to Fig. 8, etc.

The rectifier circuit 23 is directly connected to the antenna unit 22 and rectifies received AC power.

In the present embodiment, the antenna unit 22 and the rectifier circuit 23 constitute the power receiver 21.

As described above, the power receiver 21 is capable of taking energy of an electric field around the human body 2 as well as the power depending on the power signal as the power. That is, the power receiver 21 is capable of energy harvesting for deriving power from the surrounding environment.

The charger 24 charges the power storage element 25 with DC power output from the rectifier circuit 23.

The power storage element 25 is an element for storing power rectified by the rectifier circuit (power received by the antenna unit 22). The power storage element 25 supplies the power to the load 26 as necessary.

The load 26 is a circuit or element driven by power from the power storage element 25. The load 26 may be for example a control unit such as a microcomputer, a communication unit, or a variety of sensors.

Fig. 2 is a schematic diagram for describing power transmission of the power transmission/reception system 100 via the human body 2. Fig. 2 schematically shows basic configurations of the power transmitter 11 and the power receiver 21.

The antenna unit 12 of the power transmitter 11 includes a first antenna conductor 31 and a second antenna conductor 32. The first antenna conductor 31 is a conductor used in contact with the human body 2 unconnected to the earth ground. The second antenna conductor 32 is a conductor capacitively coupled to the earth ground without being brought into contact with the human body 2.

In the power transmitter 11, the signal generation circuit 13 applies an AC power signal between the first antenna conductor 31 and the second antenna conductor 32. Accordingly, electric charge is induced on the human body 2 in contact with the first antenna conductor 31. Such induction of electric charge to the human body 2 can take AC power depending on the power signal from the human body 2.

The antenna unit 22 of the power receiver 21 includes a third antenna conductor 33 and a fourth antenna conductor 34. The third antenna conductor 33 is a conductor used in contact with the human body 2 unconnected to the earth ground. The fourth antenna conductor 34 is a conductor capacitively coupled to the earth ground without being brought into contact with the human body 2. The third antenna conductor 33 and the fourth antenna conductor 34 respectively correspond to the first antenna conductor 31 and the second antenna conductor 32 in the power transmitter 11.

In the power receiver 21, AC power (power depending on the power signal or power of the electric field energy) received by the antenna unit 22 (the third antenna conductor 33 and the fourth antenna conductor 34) is directly input to the rectifier circuit 23. Then, the rectifier circuit 23 outputs power rectified as DC. In this manner, the power receiver 21 receives power depending on an electrical signal via the human body 2.

Fig. 2 schematically shows a flow of power supplied from the power transmitter 11 (power transmission device 10) to the power receiver 21 (power reception device 20) via the human body 2 as the thick dotted arrow. As it can be seen from the figure, in the power transmission/reception system 100, voluntarily transmitting power based on the power signal can increase power that can be taken from the human body. This enables a device in contact with the human body 2, such as the power receiver 21 (power reception device 20), to be efficiently supplied with power via the human body 2.

It should be noted that the power transmitted via the human body 2 is transmitted to the entire body of the user 1, not transmitted through a constant path. Therefore, the power depending on the power signal can be received at any site of the human body 2 of the user 1.

Hereinafter, configurations of the respective units of the power transmission device 10 and the power reception device 20 will be described specifically.

### [Configuration of Power Transmission Device]

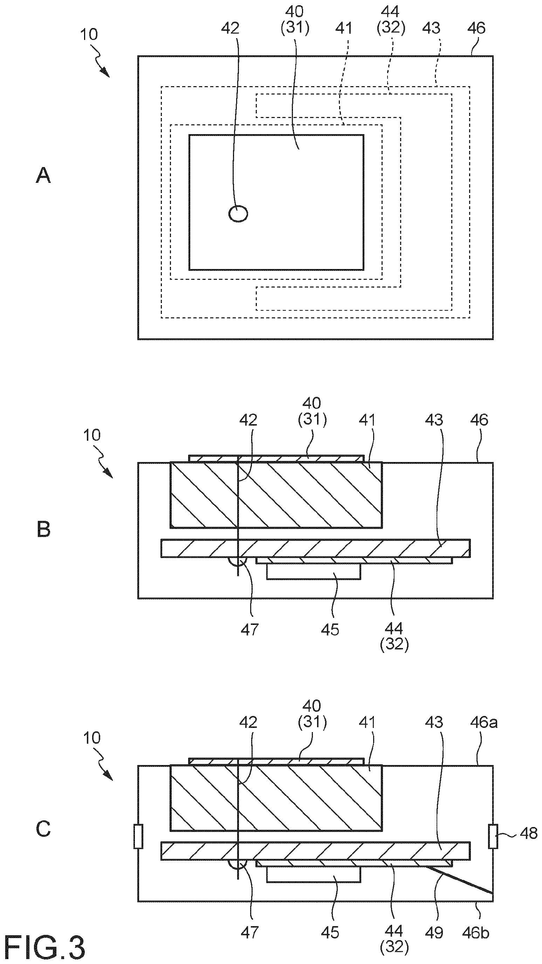

Fig. 3 is a schematic diagram showing an example of a plan configuration and a cross-sectional configuration of the power transmission device 10. Figs. 3A and 3B schematically show a plan view and a cross-sectional view of the power transmission device 10. Moreover, Fig. 3C schematically shows a cross-sectional view showing another configuration example of the power transmission device 10.

As shown in Figs. 3A and 3B, the power transmission device 10 includes a conductor electrode 40, a dielectric unit 41, an electrically conductive pin 42, a circuit board 43, a board ground 44, a circuit unit 45, and a casing 46. In the power transmission device 10, the conductor electrode 40, the dielectric unit 41, and the circuit board 43 are provided in the stated order in the form of layers.

The conductor electrode 40 is a conductor used in contact with the human body 2 unconnected to the earth ground. The conductor electrode 40 is arranged at a position that can be brought into contact with the human body 2. Here, the conductor electrode 40 is arranged, exposed from the surface of the casing 46. The conductor electrode 40 functions as the first antenna conductor 31 described above with reference to Fig. 2.

The conductor electrode 40 is, for example, an electrode using metal. The metal used for the conductor electrode 40 includes gold, silver, aluminum, copper, iron, nickel, an alloy, and the like. For example, gold or silver can be used for configuring a low-resistance electrode. Moreover, aluminum, copper, iron, nickel, or the like can be used for reducing the cost of the conductor electrode 40. Moreover, an alloy of such metal and other metal can be used for configuring a light-weight electrode, a highly-durable electrode, or the like as appropriate.

Moreover, the conductor electrode 40 may be, for example, an electrically conductive resin or an electrically conductive rubber containing carbon, metal, or the like. An electrically conductive resin can be used for easily forming electrodes in various shapes, for example. Moreover, an electrically conductive rubber can be used for configuring an elastically deformable electrode, a highly-adhesive electrode, or the like.

In addition, the material of the conductor electrode 40 is not limited. One of the above materials or a combination thereof may be used for the electrode.

In the present embodiment, the conductor electrode 40 in a thin-plate shape (patch shape) is used. That is, the conductor electrode 40 is a planer electrode. In this case, the conductor electrode 40 functions as a patch antenna that is brought into contact with the human body 2 and an area (see Fig. 8, etc.) capacitively coupled to the human body 2 can be sufficiently increased.

It should be noted that the shape of the conductor electrode 40 is not limited. For example, the shape of the power transmission device 10 or a shape adapted for a site of the human body 2 to which it is attached or the like may be used. For example, an electrode or the like in a pin shape, a hemisphere shape, or a convexo-concave shape other than the planer electrode may be used as the conductor electrode 40.

Moreover, as to the conductor electrode 40, the conductor constituting the electrode may be configured to be brought into direct contact with the human body 2 or the surface that is brought into contact with the human body 2 may be resin-coated. For example, a resin having water resistance property such as water proof and drip-proof or having weather resistance property to ultraviolet rays or the like is used for coating the conductor electrode 40. This prevents corrosion of the conductor electrode 40 for example in a case where the power transmission device 10 is used outdoor, at a pool, or the like. In addition, this can protect the conductor electrode 40 from sweat, moisture, and the like generated when the user 1 moves.

The dielectric unit 41 is a plate-shaped dielectric provided between the conductor electrode 40 and the circuit board 43. The dielectric unit 41 is arranged in contact with a surface opposite to the surface of the conductor electrode 40, with which the human body 2 comes into contact, for example. Providing the dielectric unit 41 can increase the efficiency of transmitting power to the human body 2 from the conductor electrode 40, for example.

It should be noted that a constant space may be formed between the conductor electrode 40 and the circuit board 43 without the dielectric unit 41.

The electrically conductive pin 42 is a pin-shaped wire that penetrates the dielectric unit 41 and connects the conductor electrode 40 and the circuit board 43. One end of the electrically conductive pin 42 is connected to the conductor electrode 40 and the other end is connected to an electrode (connection point 47) of the circuit board 43.

The circuit board 43 is a board on which the board ground 44 and the circuit unit 45 are provided. In the example shown in Fig. 3B, the board ground 44, the circuit unit 45, and the connection point 47 are formed on a surface of the circuit board 43, which is on an opposite side of the dielectric unit 41. The connection point 47 is an electrode that connects the circuit unit 45 and the conductor electrode 40. The electrically conductive pin 42 penetrates the circuit board 43 and is soldered at the connection point 47.

Otherwise, the board ground 44, the circuit unit 45, or the like may be formed on a surface of the circuit board 43, which is on a side of the dielectric unit 41. Moreover, the board ground 44, the circuit unit 45, or the like may be formed on both surfaces of the circuit board 43.

The board ground 44 is a conductor pattern (ground pattern) that is a ground for the circuit board 43. The board ground 44 is typically a ground pattern of copper foil.

The board ground 44 is configured to be capacitively coupled to the earth ground without being brought into contact with the human body 2. For example, the conductor not electrically conducted to the earth ground and not shielded from the earth ground is capacitively coupled to the earth ground via a space between it and the earth ground. The board ground 44 is configured to be such a conductor.

In the example shown in Fig. 3B, the board ground 44 functions as the second antenna conductor 32. That is, the second antenna conductor 32 is constituted by a ground pattern provided in the circuit board 43 of the power transmission device 10 (power transmitter 11) .

Moreover, the conductor electrode 40 (first antenna conductor 31) and the board ground 44 (second antenna conductor 32) described above constitute the antenna unit 12 of the power transmission device 10 (power transmitter 11).

The circuit unit 45 is a unit including various circuits provided without overlapping the board ground 44. In the present embodiment, the signal generation circuit 13 is formed in the circuit unit 45. In addition, a power supply unit of the signal generation circuit 13, a control unit for controlling the signal generation circuit 13, a communication unit for communicating with other devices, and the like may be provided in the circuit unit 45. Moreover, the power supply unit and the other units may be provided separately from the circuit unit 45.

The signal generation circuit 13 applies an AC power signal between the conductor electrode 40 (first antenna conductor 31) and the board ground 44 (second antenna conductor 32) as described above. The signal generation circuit 13 is driven by a power supply unit (not shown) and generates an AC signal whose voltage changes in a predetermined cycle.

The power signal is typically a pulse signal or a sinusoidal signal. This signal is output to the conductor of each antenna constituting the antenna unit 12 as a power signal.

In the example shown in Fig. 3B, the signal generation circuit 13 applies an AC power signal between the conductor electrode 40 (first antenna conductor 31) and the board ground 44 (second antenna conductor 32).

The signal generation circuit 13 is, for example, an AC power supply circuit such as a DC-to-AC converter that converts DC power into AC. Moreover, the signal generation circuit 13 may be configured to be capable of switching the power signal on/off in accordance with the control signal output from the control unit, for example. Moreover, the signal generation circuit 13 may be configured to be capable of changing the frequency of the power signal. Otherwise, the signal generation circuit 13 may be any circuit capable of outputting the AC power signal.

The casing 46 is a casing of the power transmission device 10. The casing 46 houses the power transmitter 11 constituted by the antenna unit 12 and the signal generation circuit 13, other boards and circuit, and the like.

Moreover, a portion of the casing 46 other than the conductor electrode 40, which is brought into contact with the human body 2, is constituted by an insulative member. Thus, the body of the casing 46 is not electrically conducted to the human body 2 even when the portion other than the portion (conductor electrode 40) provided for being brought into contact with the human body 2 is brought into contact with the human body 2. A material such as insulative resin and rubber is used for the insulative member.

In the example shown in Fig. 3B, casing side surface and opposite surface as well as the surface of the casing 46, which is brought into contact with the human body 2, are also constituted by insulative members. This can achieve favorable capacitive coupling with the earth ground because the board ground 44 (second antenna conductor) is not shielded.

In the power transmission device 10 (power transmitter 11) shown in Fig. 3C, the casing 46 has a configuration different from that in Fig. 3B. Here, a casing 46a and a casing 46b are used as the casing 46. The casing 46a is a casing that covers the side on which the conductor electrode 40 is provided. The casing 46a is constituted by an insulative member. The casing 46b is a casing that covers on a side opposite to the side on which the conductor electrode 40 is provided. The casing 46b is constituted by an electrically conductive member such as metal.

Moreover, the casing 46a and the casing 46b are connected via a connection portion 48 with a screw or by fitting.

In this manner, in Fig. 3C, the side that is not brought into contact with the human body 2 is constituted by the electrically conductive casing 46b. In this case, the casing 46b can be used as the second antenna conductor 32.

For example, the board ground 44 provided on the circuit board 43 and the electrically conductive casing 46b are electrically connected with the metal wire 49 or the like. That is, the second antenna conductor 32 is constituted by the electrically conductive member (casing 46b) of the casing (casing 46) of the power transmission device 10 (power transmitter 11), which is provided in the portion that is not brought into contact with the human body. This can achieve the second antenna conductor 32 sufficiently capacitively coupled to the earth ground.

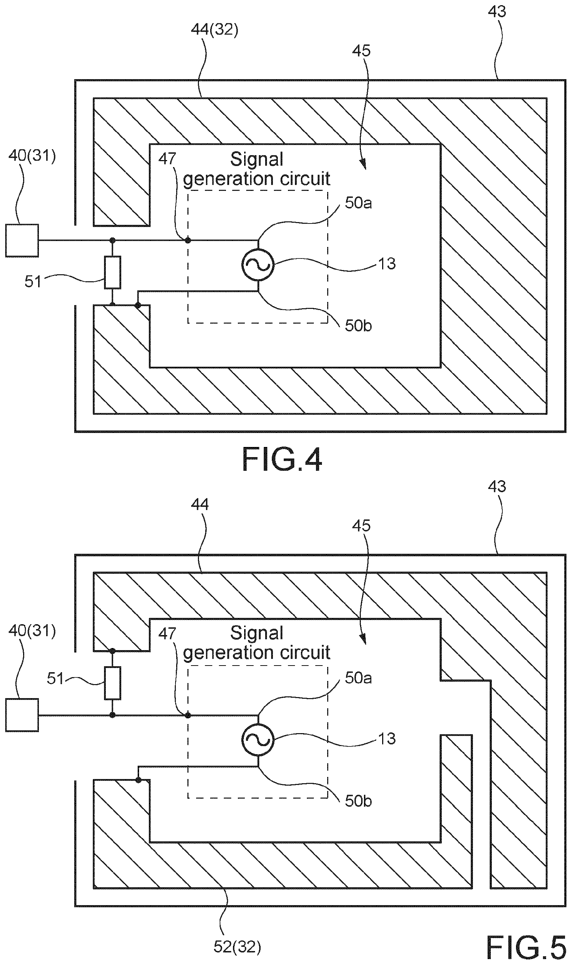

Fig. 4 is a schematic diagram showing a configuration example of the circuit board 43. Fig. 4 schematically shows an example of a plan configuration of the circuit board 43 described above with reference to Fig. 3.

The hatched region in the figure is the board ground 44 (second antenna conductor 32). The board ground 44 is configured not to overlap the circuit unit 45 including the signal generation circuit 13 and the like. The shape and arrangement of the board ground 44 are not limited. For example, the shape and arrangement of the board ground 44 may be set as appropriate in accordance with the configuration of the circuit unit 45.

Moreover, the wire connecting the conductor electrode 40 (first antenna conductor 31) and the circuit unit 45 is configured not to overlap the board ground 44. This can prevent interference between potential of the board ground 44 and a power signal generated by the signal generation circuit 13.

As shown in Fig. 4, the signal generation circuit 13 has two output terminals 50a and 50b that output AC or pulse wave power signal. One output terminal 50a is connected to the conductor electrode 40 via the connection point 47. The other output terminal 50b is connected to the board ground 44.

Moreover, the conductor electrode 40 and the board ground 44 have an electrostatic discharge (ESD) protection component 51 as one of ESD countermeasures therebetween. The ESD protection component 51 is a variable resistor or the like. It can protect elements at the circuit unit 45, for example, when a high voltage is applied between the conductor electrode 40 and the board ground 44.

Moreover, as described above with reference to Fig. 3C, the casing 46b and the board ground 44 are connected via a metal wire 49 in a case where the electrically conductive casing 46b is used in the portion of the casing 46, which is not brought into contact with the human body 2. In this case, the board ground 44 and the casing 46b both function as the second antenna conductor 32. Moreover, the area or the like of the board ground 44 may be reduced in a case of using the casing 46b as the ground.

Fig. 5 is a schematic diagram showing another configuration example of the circuit board 43. In the example shown in Fig. 5, the second antenna conductor 32 is constituted by another conductor pattern 52 provided in the circuit board 43 in addition to the board ground 44.

Here, the board ground 44 and a conductor pattern 52 electrically separated from the board ground 44 are formed without overlapping the circuit unit 45 (e.g., signal generation circuit 13).

The conductor pattern 52 is configured to be capacitively coupled to the earth ground without being brought into contact with the human body 2.

In the thus configured circuit board 43, the output terminal 50a of the signal generation circuit 13 is connected to the conductor electrode 40 via the connection point 47 and the output terminal 50b is connected to the conductor pattern 52. Accordingly, an AC or pulse wave power signal is applied between the conductor electrode 40 and the conductor pattern 52.

Moreover, as in Fig. 4, the conductor electrode 40 and the board ground 44 have the ESD protection component 51 such as a variable resistor as one of ESD countermeasures therebetween.

Moreover, as described above with reference to Fig. 3C, the casing 46b and the conductor pattern 52 are connected via the metal wire 49 in a case where the electrically conductive casing 46b is used in the portion of the casing 46, which is not brought into contact with the human body 2. In this case, the conductor pattern 52 and the casing 46b both function as the second antenna conductor 32. Moreover, in a case of connecting the conductor pattern 52 to the casing 46b, the area of the board ground 44 may be increased by reducing the area or the like of the conductor pattern 52.

### [Configuration of Power Reception Device]

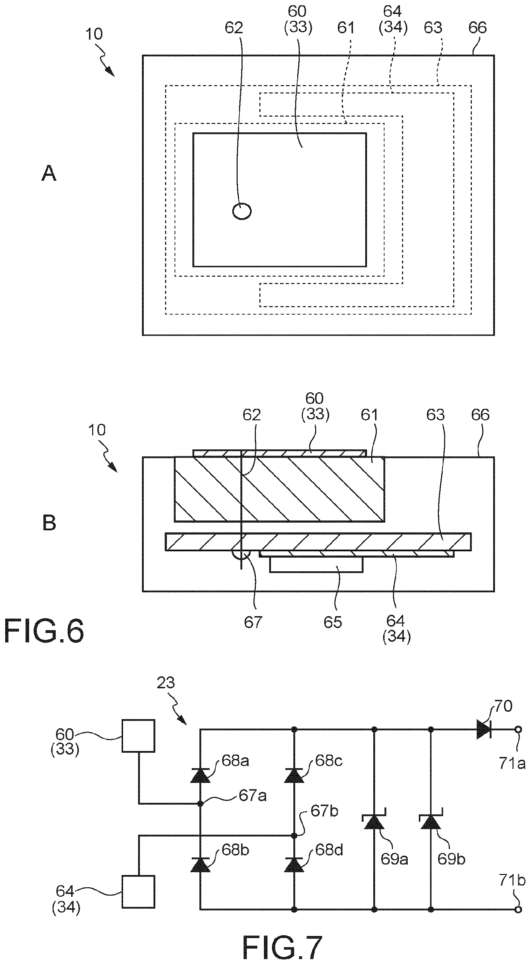

Fig. 6 is a schematic diagram showing an example of a plan configuration and a cross-sectional configuration of the power reception device 20. Figs. 6A and 6B schematically show a plan view and a cross-sectional view of the power reception device 20.

As shown in Figs. 6A and 6B, the power reception device 20 includes a conductor electrode 60, a dielectric unit 61, an electrically conductive pin 62, a circuit board 63, a board ground 64, a circuit unit 65, and a case 66.

These configurations of the power reception device 20 can be configurations substantially similar to those of the above-mentioned power transmission device 10 except for the circuit unit 65. Thus, descriptions of the above-mentioned conductor electrode 40, the dielectric unit 41, the electrically conductive pin 42, the circuit board 43, the board ground 44, and the casing 46 can replace the descriptions of the conductor electrode 60, the dielectric unit 61, the electrically conductive pin 62, the circuit board 63, the board ground 64, and the case 66. Hereinafter, duplicates in the description of the power reception device 20 will be omitted as appropriate.

The conductor electrode 60 is an electrode provided, exposed from the case 66. The conductor electrode 60 is used in contact with the human body 2 unconnected to the earth ground.

The dielectric unit 61 is a dielectric provided between the conductor electrode 60 and the circuit board 63.

The electrically conductive pin 62 is a wire for connecting the conductor electrode 60 and the circuit board 63.

The circuit board 63 is a board on which the board ground 64 and the circuit unit 65 are provided. Moreover, a connection portion between the circuit board 63 and the electrically conductive pin 62 is a power feed point 67a from the conductor electrode 60 to the circuit unit 65.

The board ground 64 is a pattern (ground pattern) of the conductor that is the ground for the circuit board 63. The board ground 64 is configured to be capacitively coupled to the earth ground without being brought into contact with the human body 2. The board ground 64 is, for example, a ground pattern similar to the board ground 44 described above with reference to Fig. 4.

The case 66 is a casing of the power reception device 20 and houses the respective units of the power reception device 20.

In the example shown in Fig. 6, the conductor electrode 60 and the board ground 64 function as the third antenna conductor 33 and the fourth antenna conductor 34 of the antenna unit 22 described above with reference to Fig. 2.

The circuit unit 65 is a unit including various circuits provided without overlapping the board ground 64. In the present embodiment, the rectifier circuit 23 is formed in the circuit unit 65. In addition, the charger 24, the power storage element 25, and the load 26, and the like shown in Fig. 1 may be provided in the circuit unit 65. Moreover, the charger 24 and the like may be provided separately from the circuit unit 65.

Fig. 7 is a circuit diagram showing an example of the rectifier circuit 23 mounted on the power reception device 20.

In the power reception device 20, for example, a voltage of about several volts will be generated between the conductor electrode 60 and the board ground 64, though current that can be taken will be relatively small. When rectifying such a signal, it is important to sufficiently reduce leakage current and the like.

Therefore, for example, a circuit having extra leakage current reduced by excluding capacitor and the like used for the rectifier circuit and the like for doubling voltage is used as the rectifier circuit 23.

As shown in Fig. 7, the rectifier circuit 23 is configured as a full-wave rectifier circuit.

The rectifier circuit 23 includes four diodes 68a to 68d, two Zener diodes 69a and 69b, a backflow prevention diode 70, and output terminals 71a and 71b.

The diode 68a and the diode 68b are connected in series so that the diode 68a precedes the diode 68b to provide a forward voltage. Moreover, the diode 68a and the diode 68b have the power feed point 67a therebetween. The diode 68c and the diode 68d are connected in series so that the diode 68c precedes the diode 68d to provide a forward voltage.

A cathode of each of the diode 68a, the diode 68c, the Zener diode 69a, and the Zener diode 69b is connected to an anode of the backflow prevention diode 70. Moreover, a cathode of the backflow prevention diode 70 is connected to the output terminal 71a.

An anode of each of the diode 68b, the diode 68d, the Zener diode 69a, and the Zener diode 69b is connected to the output terminal 71b.

The conductor electrode 60 is connected to the power feed point 67a between the diode 68a and the diode 68b. Moreover, the board ground 64 is connected to a connection point 67b of the diodes 68c and 68d.

For example, the AC power received by the antenna unit 22 (the conductor electrode 60 and the board ground 64) is full wave rectified by the four diodes 68a to 68d and output as DC power from the output terminals 71a and 71b. In this manner, the rectifier circuit 23 shown in Fig. 7 is constituted by the diodes 68a to 68d that are necessary minimum for full-wave rectifying. This reduces unnecessary leakage current. Thus, the power reception efficiency can increase sufficiently.

The Zener diode 69a is, for example, an element for leaking static electricity and the like generated between the conductor electrode 60 and the board ground 64. The Zener diode 69a functions as an ESD protection component that leaks static electricity for example when a high voltage such as static electricity is generated.

Moreover, the Zener diode 69b is, for example, an element for protecting a subsequent IC circuit (e.g., charger 24) connected to the output terminals 71a and 71b. The Zener diode 69b functions as a low-resistance conductor for example when the voltage between the conductor electrode 60 and the board ground 64 becomes equal to or higher than 6.5 V. This can prevent the subsequent circuit from being damaged.

Moreover, the backflow prevention diode 70 is a diode that prevents current from flowing back. Providing the backflow prevention diode 70 allows stable operation of the subsequent circuit, for example.

It should be noted that a configuration of the rectifier circuit 23 is not limited. For example, a voltage doubler rectifier circuit or a voltage quadrupler rectifier circuit for multiplying voltage through a capacitor or a rectifier circuit incorporating a Cockcroft-Walton (CW) generator may be used. Moreover, for example, a half-wave rectifier circuit may be used. In addition, the rectifier circuit 23 may be configured as appropriate in accordance with power reception properties of the antenna unit 22, properties of an element or circuit used as the load 26, or the like.

The configuration in which the board ground 64 of the power reception device 20 functions as the fourth antenna conductor 34 has been described above. A conductor other than the board ground 64 can be used the fourth antenna conductor 34 also in the power reception device 20 as in the power transmission device 10.

For example, a portion of the case 66, which is not brought into contact with the human body 2, may be constituted by an electrically conductive member (see Fig. 3C). In this case, the electrically conductive member and the board ground 64 are connected through a metal wire or the like. Accordingly, the portion of the case 66, which is constituted by the electrically conductive member, functions as the fourth antenna conductor 34.

Moreover, for example, the circuit board 63 may include a conductor pattern different from the board ground 64 (see Fig. 5). In this case, the rectifier circuit 23 is connected to the conductor electrode 60 and the conductor pattern and the conductor pattern functions as the fourth antenna conductor 34. In addition, in a case where the portion of the case 66, which is not brought into contact with the human body 2, is constituted by the electrically conductive member, the electrically conductive member constituting the conductor pattern and the case 66 may be connected through a metal wire or the like.

In addition, a configuration of the fourth antenna conductor 34 is not limited.

### [Operation of Antenna Unit]

Fig. 8 is a schematic diagram for describing operations of the antenna units 12 and 22 on the transmission side and the reception side. Figs. 8A and 8B are schematic diagrams showing the antenna unit 12 on the transmission side and the antenna unit 22 on the reception side that are brought into contact with the human body 2. Fig. 8C schematically shows the human body 2 unconnected to the earth ground 4 and the power transmission device 10 and the power reception device 20 attached to the human body 2. Here, the power transmission device 10 is attached to an arm and the power reception device 20 is attached to a wrist.

First of all, an operation of the antenna unit 12 on the transmission side will be described.

As shown in Fig. 8A, the first antenna conductor 31 (conductor electrode 40) of the antenna unit 12 and the human body 2 can be considered to be capacitively coupled in terms of electricity. Moreover, it is assumed that the human body 2 is electrically unconnected to the earth ground 4. In this case, the human body 2 is an ungrounded antenna element as viewed from the power transmission device 10 (power transmitter 11).

Moreover, the second antenna conductor 32 (e.g., board ground 44) is not directly connected to the earth ground 4. However, the second antenna conductor 32 (e.g., board ground 44) is capacitively coupled to the earth ground 4 as shown in Fig. 8C. Therefore, it can be considered that the second antenna conductor 32 forms pseudo ground using the earth ground 4 as a reference. Accordingly, the second antenna conductor 32 functions as ground for the human body 2 that is an antenna element.

Changing voltage generated in the first antenna conductor 31, i.e., voluntarily changing an electric field acting on the human body 2 in this state induces electric charge to the human body 2. That is similar to the state in which the AC power is applied to the human body 2 as the antenna element. This enables AC or pulse wave power depending on a change in voltage (power signal) of the first antenna conductor 31 to be transmitted using the human body 2 as a communication channel. Fig. 8A schematically shows the AC power transmitted via the human body 2 using the sinusoidal waveform.

It should be noted that the human body 2 and the second antenna conductor 32 are both unconnected to the earth ground 4. Therefore, energy of the power signal is prevented from being dissipated in the earth ground 4.

Next, an operation of the antenna unit 22 on the reception side will be described.

In general, an environment where humans live have various types of electric field energy. Such electric field energy can be classified into low-frequency components and high-frequency components.

For example, leakage electric field (50 Hz/60 Hz) from AC power supplies of households, noise near personal computers, voltage generated when people walk (see Fig. 8 C), and the like are electric field energy as the low-frequency components and called quasi-electrostatic field (near field). On the other hand, radio broadcasting (AM/FM), television broadcasting, communication radio waves for portable phones, and the like are electric field energy as the high-frequency components and called radio waves (far field).

As shown in Fig. 8B, the third antenna conductor 33 (conductor electrode 60) of the antenna unit 22 and the human body 2 are capacitively coupled to each other in terms of electricity. As on the transmission side, the human body 2 is an ungrounded antenna element as viewed from the power reception device 20 (power receiver 21).

Moreover, the fourth antenna conductor 34 (e.g., board ground 64) is capacitively coupled to the earth ground 4 as shown in Fig. 8C and forms pseudo ground. As a result, the fourth antenna conductor 34 functions as ground for the human body 2 as the antenna element.

With such a configuration enables the antenna unit 22 to take both types of electric field energy of the quasi-electrostatic field like noise that is leakage current and radio waves like broadcasting waves, using the human body 2 as the antenna element.

As a matter of course, the electric field energy taken by the antenna unit 22 also includes the electric field energy of the power signal output from the power transmission device 10 (power transmitter 11). Thus, the antenna unit 22 receives power combining the quasi-electrostatic field, the radio waves, and the power signal energy.

Fig. 8B schematically shows a waveform of power received via the human body 2. The waveform of the power is a waveform including wide-range frequency components.

The antenna unit 22 configured in the above-mentioned manner is capable of receiving energy of a quasi-electrostatic field at a low frequency, for example, 50 Hz. A reason why the antenna unit 22 resonates at a low frequency as such is because for example, iron contained in blood inside the human body 2 functions as an antenna. Such an action enables the antenna unit 22 to take electric field energy in a very wide band.

### [Power Induced on Human Body]

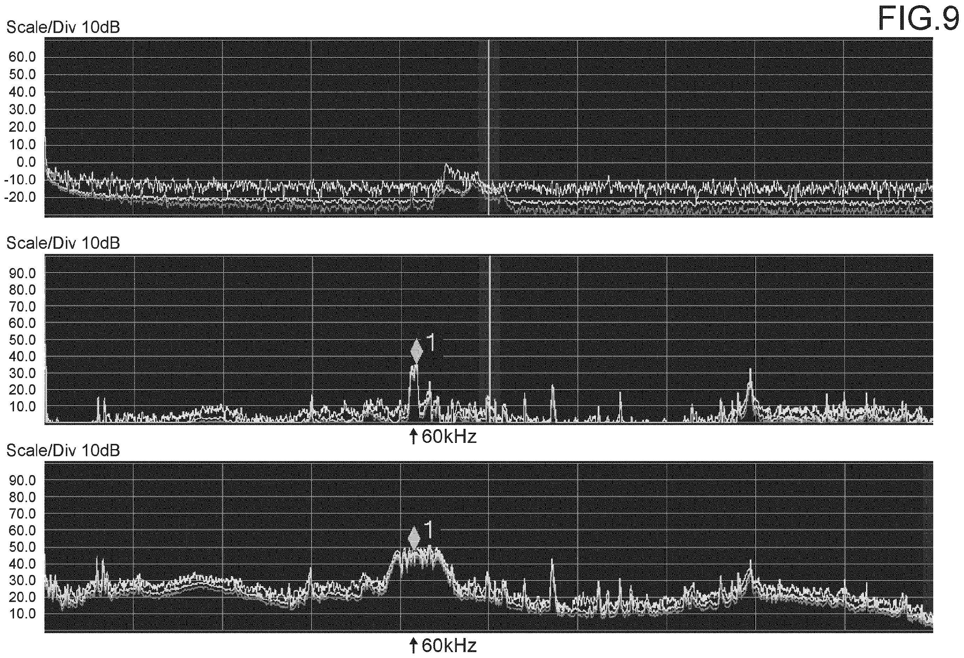

Fig. 9 is a graph showing a waveform of the power induced on the human body 2.

The graphs shown in upper, middle, and lower parts of Fig. 9 are graphs showing a waveform of the power induced on the human body 2, which has been detected through the power reception device 20 (antenna unit 22). The horizontal axis of the graph indicates frequency and frequencies in a range of 2 Hz to 150 kHz are plotted. Moreover, the vertical axis of the graph indicates intensity of the frequency components and the scale is divided into divisions of 10 decibels.

The graph in the upper part of Fig. 9 is a graph measured in a state in which the human body 2 or the like is not held in contact with the conductor electrode 60 of the antenna unit 22. This has plotted power received by the antenna unit 22 alone and the intensity of the frequency components was about 0 dB or less.

The graph in the middle part of Fig. 9 is a graph measured in a state in which the human body 2 is held in contact with the conductor electrode 60 of the antenna unit 22. At that time, the human body 2 was not held in contact with a device as a noise source. Thus, it can be said that this graph has plotted power taken by receiving electric field energy or the like of the quasi-electrostatic field in a state in which the human body 2 was functioning as the antenna element.

Comparing the graph in the upper part of Fig. 9 with the graph in the middle part, the received power has generally increased by 10 dB in the graph in the middle part. It can be seen from the figure that the contact of the human body 2 with the conductor electrode 60 of the antenna unit 22 allowed the power to be thoroughly received in a wide frequency band.

In addition, in the graph in the middle part of Fig. 9, a peak appears at 60 kHz as shown with the diamond mark 1 in the graph. It is considered that power of 60 kHz has been received receiving noise from a noise source (e.g., a computer), which was located in the periphery of the human body 2 and was not held in contact with the human body 2. Thus, such a low frequency, for example, a band centered at 60 kHz is a band in which electric charge is easily induced on the human body 2.

The graph in the lower part of Fig. 9 is a graph measured in a state in which the human body 2 was held in contact with the conductor electrode 60 of the antenna unit 22 and the human body 2 was held in contact with a computer as a noise source. Thus, it can be said that this graph has plotted power from the noise source (the electric field energy in the quasi-electrostatic field) transmitted to the human body 2 as the antenna element.

Comparing the graph in the middle part of Fig. 9 with the graph in the lower part, the received power has been generally further increased by 20 dB in the graph in the lower part. It can be seen from the figure that the contact of the human body 2, which has been held in contact with the conductor electrode 60, with the noise source allowed the power to be thoroughly received in a wide frequency band.

Moreover, in the graph in the lower part of Fig. 9, a wider peak was measured, centered at 60 kHz. As such, power with relatively high intensity can be received in a band in which electric charge is easily induced.

As described above, there are frequencies at which electric charge is easily induced on the human body 2, depending on an electric field. This is a characteristic also applied to a case of voluntarily generating power (electric field energy) by applying a power signal to the human body 2.

For example, the power intensity depending on the power signal increases at frequencies at which electric charge is easily induced, which increases the power transmission efficiency. On the contrary, the power intensity depending on the power signal decreases at frequencies at which electric charge is not easily induced, which can lower the power that can be received. In particular, in the human body 2, electric charge is not easily induced at frequencies higher than 1 GHz.

### [Operation of Signal Generation Circuit]

The present inventors have found a method of setting the frequency of the power signal in accordance with such a characteristic of the human body 2. That is, the frequency of the power signal generated by the signal generation circuit 13 in the power transmitter 11 (power transmission device 10) is set to be a frequency at which electric charge is easily induced on the human body 2.

For example, the power signal is set to have a frequency of 60 kHz. Accordingly, the power intensity depending on the power signal increases, and the transmission efficiency can be greatly increased in comparison with a case of using other frequencies.

The present technology is not limited thereto. For example, the frequency of the power signal may be set in a range of 60 kHz ±10 kHz. Moreover, in the graph in the middle part of Fig. 9, the power reception intensity is higher also near 120 kHz, which is twice as high large as 60 kHz. A frequency that is an integer multiple of 60 kHz as a harmonic (e.g., 120 kHz or 180 kHz) may be used as such. In addition, the frequency of the power signal may be set to be an arbitrary frequency at which electric charge is easily induced on the human body 2.

The power transmission device 10 may include a control unit that controls the power transmission of the power transmitter 11. Specifically, the control unit is a unit that controls the operation of the signal generation circuit 13 by using a control signal.

In this case, the signal generation circuit 13 generates the power signal in accordance with the control signal output from the control unit. In the present embodiment, the control unit corresponds to a controller.

For example, the control signal is a signal specifying on/off of the power signal. The signal generation circuit 13 turns on/off the power signal in accordance with such a control signal.

For example, the control unit monitors the state of the power supply unit that drives the signal generation circuit 13, and sets the power signal to be off in a case where the remaining battery or the like is low. Alternatively, on/off of the power signal may be set in accordance with an operation made by the user 1.

Moreover, the control unit may communicate with the other power reception device 20 in a case where a communication unit or the like is provided. In this case, the power signal may be set to be on in a case where the power reception device 20 requests for power, and the power signal may be set to be off in a case where the power request ends. This allows effective power supply.

Moreover, for example, the control signal is a signal specifying a frequency of the power signal. In this case, the signal generation circuit 13 is configured to be capable of changing the frequency of the power signal. For example, in a case where the power transmission device 10 transmits the power signal in the frequency band used for communication, it can interfere with the communication. Therefore, for example, the control unit changes the frequency of the power signal as appropriate in accordance with a communication status or the like of the device. This enables power to be supplied without interfering with the communication.

It should be noted that the control unit is not essential. For example, a switch element or the like for switching on/off in accordance with a voltage supplied from the power supply unit may be incorporated in the signal generation circuit 13. In this case, the power signal may be automatically turned off when the voltage of the power supply unit lowers. The use of such a switch element can simplify the configuration of the power transmission device 10, and the power consumption or the like can be reduced.

In addition, a method of controlling the operation of the signal generation circuit 13 is not limited.

### [Power Transmission/Reception Device]

Hereinabove, the case where the power transmission device 10 (power transmitter 11) and the power reception device 20 (power receiver 21) are configured as the separate devices has been described. A device (power transmission/reception device) having both the power transmission function and the power reception function may be configured other than the devices in which the power transmission function is separated from the power reception function as such.

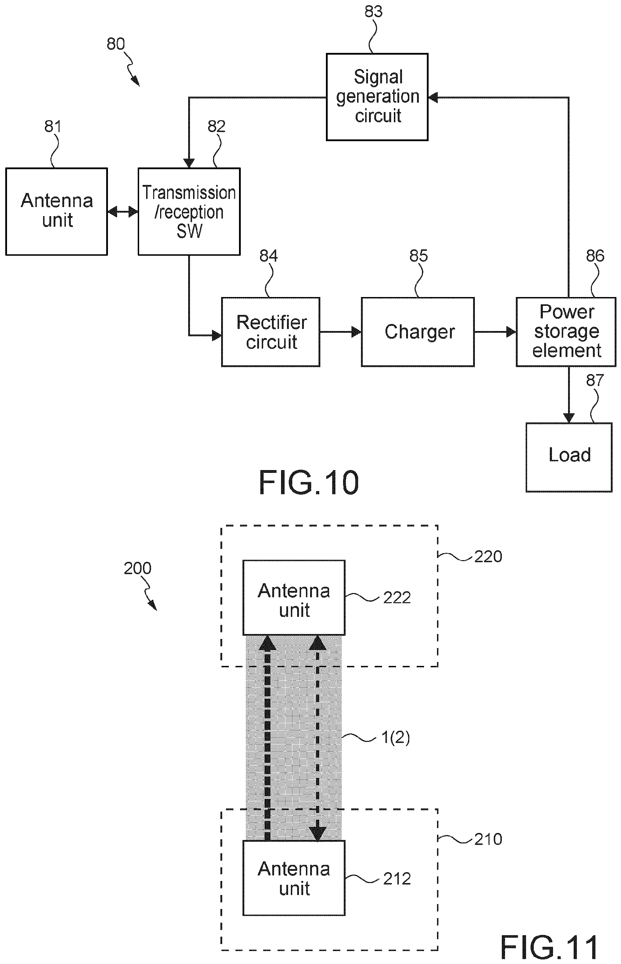

Fig. 10 is a block diagram showing functional configuration examples of the power transmission/reception device.

A power transmission/reception device 80 is a device capable of power transmission/reception via the human body 2.

The power transmission/reception device 80 includes an antenna unit 81, a transmission/reception switching switch 82, a signal generation circuit 83, a rectifier circuit 84, a charger 85, a power storage element 86, and a load 87. This configuration is a configuration combining the power transmission device 10 and the power reception device 20 described above.

The antenna unit 81 functions as an antenna that sends and receives power via the human body 2. The antenna unit 81 is configured to be similar to the antenna unit 12 of the power transmitter 11 (or the antenna unit 22 of the power receiver 21) described above with reference to Fig. 1, etc. Hereinafter, out of two antenna conductors constituting the antenna unit 81, a conductor used in contact with the human body 2 will be referred to as the first antenna conductor 31 and a conductor not in contact with the human body 2 will be referred to as the second antenna conductor 32.

The transmission/reception switching switch 82 switches the antenna unit 81 to connect to either one of the signal generation circuit 83 and the rectifier circuit 84. In the present embodiment, the transmission/reception switching switch 82 corresponds to a switching circuit. A method of switching connection with the antenna unit 81 will be described later.

The signal generation circuit 83 generates an AC power signal and outputs the AC power signal to the antenna unit 81. Moreover, the power storage element 86 is connected to the signal generation circuit 83. Thus, the signal generation circuit 83 generates a power signal by using the power storage element 86 as a power source.

In the power transmission/reception device 80, the power transmitter 11 is achieved by connecting the antenna unit 81 and the signal generation circuit 83 through the transmission/reception switching switch 82. In this case, the power transmitter 11 transmits AC power by applying the AC power signal generated by the signal generation circuit 83 to the antenna unit 81.

The rectifier circuit 84 is connected to the first antenna conductor 31 and the second antenna conductor 32 constituting the antenna unit 81 and rectifies the AC power received by the antenna unit 81.

In the power transmission/reception device 80, the power receiver 21 is achieved by connecting the antenna unit 81 and the rectifier circuit 84 through the transmission/reception switching switch 82. In this case, the rectifier circuit 84 rectifies the AC power generated in the antenna unit 81 and the power receiver 21 receives the rectified AC power.

The power transmission/reception device 80 thus has a configuration in which the power transmitter 11 and the power receiver 21 share the antenna unit 81.

The charger 85 charges the power storage element 86 with the power output from the rectifier circuit 84.

The power storage element 86 is an element for storing the power rectified by the rectifier circuit 84 and supplies the power to the load 87 as necessary.

The load 87 is a circuit or element driven by the power of the power storage element 86.

The power transmission/reception device 80 includes a communication unit that communicates with, for example, other devices as the load 87. The communication unit is used as a unit corresponding to, for example, Bluetooth (registered trademark) Low Energy (BLE) or near-field communication such as Zigbee.

For example, BLE or the like reads information about the power receiving status, the remaining battery, and the like in the other devices. At that time, in a case where a device or the like has low power, the transmission/reception switching switch 82 is controlled to connect the antenna unit 81 and the signal generation circuit 83. Moreover, the signal generation circuit 83 generates a power signal on the basis of the power of the power storage element 86 and applies the power signal to the antenna unit 81. In this manner, the low-power device can be supplied with power via the human body 2.

Moreover, for example, in a case where the power becomes unnecessary or in a case where the remaining power of the power storage element 86 lowers, the transmission/reception switching switch 82 is controlled to connect the antenna unit 81 and the rectifier circuit 84, and the electric field energy generated in the human body 2 is supplied to the power storage element 86 via the antenna unit 81, the rectifier circuit 84, and the charger 85. This enables the power storage element 86 to be recharged. Thus, the device in contact with the human body 2 can be suitably supplied with power without charging by the external power supply, for example.

It should be noted that the power transmission/reception device 80 may include a filter element that separates frequency components instead of the above-mentioned transmission/reception switching switch 82. In this case, the filter element is configured to output the frequency components of the power signal output from the signal generation circuit 80, for example, to the antenna unit 81. Moreover, the filter element is configured to output frequency components of the power received by the antenna unit 81, excluding the same frequency components as the power signal, to the rectifier circuit 84. The use of the filter element makes a switch operation for example unnecessary, and the power consumption can be reduced.

As described above, the power transmitter 11 according to the present embodiment includes the first antenna conductor 31 that is brought into contact with the human body 2 and the second antenna conductor 32 that is not brought into contact with the human body 2 in the state in which the human body 2 is unconnected to the earth ground 4. The second antenna conductor 32 of them is capacitively coupled to the earth ground 4. Therefore, the human body 2 serves as a conductor capable of transmitting the AC power. In this state, the AC power signal is applied to each of the antenna conductors 31 and 32. This allows efficient power supply via the human body 2.

### <Second Embodiment>

A power transmission/reception system according to a second embodiment of the present technology will be described. Hereinafter, descriptions of portions similar to the configurations and actions in the power transmission/reception system 100 described in the above embodiment will be omitted or simplified.

Fig. 11 is a schematic diagram outlining the power transmission/reception system according to the second embodiment.

A power transmission/reception system 200 includes a power transmission device 210 and a power reception device 220. In the present embodiment, the power transmission device 210 and the power reception device 220 both function as human body communication devices that perform human body communication.

The human body communication is a communication scheme to transmit/receive a communication signal by using the human body 2 that is the dielectric as a medium. For example, the human body communication is used for communication between devices attached to the human body 2 or communication between a device attached to the human body and an external device.

The power transmission/reception system 200 performs power transmission and human body communication depending on the power signal in a state in which the power transmission device 210 and the power reception device 220 are brought into contact with the human body 2 of the user 1. Thus, as shown in Fig. 11, a communication signal for performing human body communication is output to the human body 2 in addition to the power signal. It should be noted that dividing the frequency band enables the power transmission and human body communication to be simultaneously performed. For example, the frequency to perform human body communication can be 1 MHz or more and the frequency to transmit power can be less than 1 MHz.

Fig. 11 schematically shows the power depending on the power signal as the thick arrow and schematically shows the human body communication signal as the thin arrow. Hereinafter, configurations of a power transmission device 210 and the power reception device 220 will be each described.

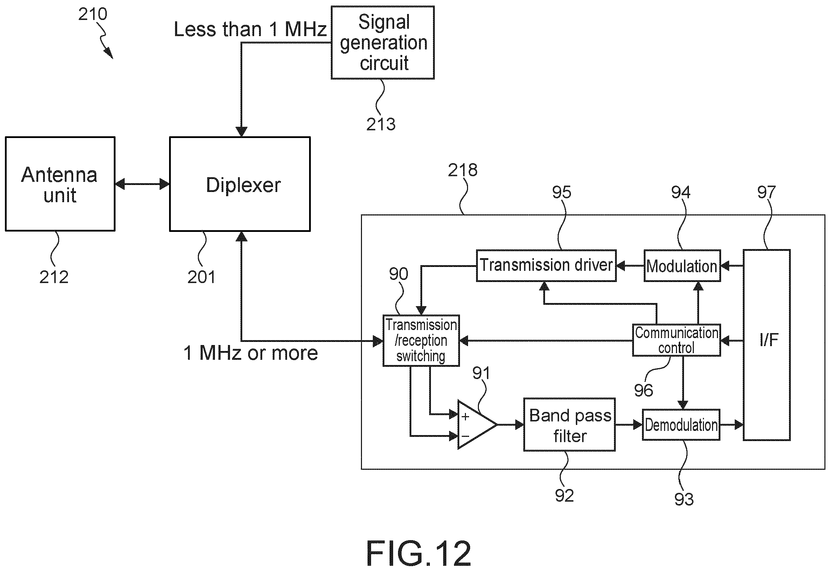

Fig. 12 is a block diagram showing functional configuration examples of the power transmission device 210 that performs human body communication.

The power transmission device 210 includes an antenna unit 212, a diplexer 201, a signal generation circuit 213, and a human body communication unit 218. This configuration is a configuration combining the human body communication unit 218 with the power transmission device 10 shown in Fig. 1 via the diplexer 201.

The diplexer 201 is a device of three terminals constituted by one main terminal and two sub-terminals. For example, a signal input to the main terminal is divided into higher and lower frequency components than a predetermined frequency and output from each sub-terminal. Moreover, a signal input to each sub-terminal is output from the main terminal as a signal mixing the frequency components. The diplexer 201 is thus a separation circuit that separates frequencies.

The main terminal of the diplexer 201 is connected to the antenna unit 212 (first antenna conductor 31). Moreover, one sub-terminal is connected to the signal generation circuit 213 and the other sub-terminal is connected to the human body communication unit 218. Hereinafter, a path connecting the antenna unit 212 and the signal generation circuit 213 will be referred to as a first path and a path connecting the antenna unit 212 and the human body communication unit 218 will be referred to as a second path.

The first path is a path that allows frequency components lower than the threshold frequency to pass. The second path is a path that allows frequency components equal to or higher than the threshold frequency to pass. Here, the threshold frequency is set in accordance with the frequency that can be used for the human body communication. In general, the frequency that can be used for the human body communication is a frequency of 1 MHz or more. In view of this, 1 MHz is set as the threshold frequency of the diplexer 201. In addition, the threshold frequency may be set as appropriate in accordance with a frequency for the human body communication.

Therefore, the first path is a path that connects the antenna unit 212 and the signal generation circuit 213 and allows signals having frequencies lower than the frequency for the human body communication to pass. Moreover, the second path is a path that connects the antenna unit 212 and the human body communication unit 218 and allows signals having the frequency for the human body communication to pass. This makes it possible to handle the power signal and the human body communication signal separately from each other and to combine and output the respective signals to the antenna unit 212.

Moreover, in the present embodiment, the signal generation circuit 213 generates a power signal having a lower frequency than the frequency for the human body communication. More specifically, the power signal is set to have a frequency lower than the threshold frequency (here, 1 MHz) set to the diplexer 201. This enables power to be transmitted via the human body 2 without interfering with the human body communication.

The human body communication unit 218 is a communication unit that is connected to the antenna unit 212 and performs human body communication. In the present embodiment, the human body communication unit 218 corresponds to a communication unit. Communication signals used by the human body communication unit 218 are signals having higher frequencies than the threshold frequency (e.g., 1 MHz).

The human body communication unit 218 includes a transmission/reception switching switch 90, an amplification unit 91, a band pass filter 92, a demodulation circuit 93, a modulation circuit 94, a transmission driver 95, a communication controller 96, and an interface unit 97.

The transmission/reception switching switch 90 is connected to the antenna unit 212 via the diplexer 201. The transmission/reception switching switch 90 switches between communication signal transmission to the antenna unit 212 and communication signal reception from the antenna unit 212.

The amplification unit 91 is a differential amplifier that differentially amplifies a communication signal output from the transmission/reception switching switch 90. This reduces common mode noise or the like common to the respective antenna conductors.

The band pass filter 92 extracts a signal (communication signal) having the frequency that can be used for the human body communication from the output of the amplification unit 91. This cuts signal components not required for the communication.

The demodulation circuit 93 demodulates an analog communication signal extracted by the band pass filter 92 and converts the demodulated analog communication signal into a digital signal. The demodulated communication signal is input to the interface unit 97.

The modulation circuit 94 modulates the digital signal output from the interface unit 97 and converts the modulated digital signal into an analog communication signal. The modulated communication signal is input to the transmission driver 95.

The transmission driver 95 adjusts a voltage level of the analog communication signal, for example. The communication signal output from the transmission driver 95 is input to the transmission/reception switching switch 90.

The communication controller 96 controls the operation of each unit of the human body communication unit 218 on the basis of a control signal or the like output from the interface unit 97. For example, a connection target of the transmission/reception switching switch 90 is controlled as appropriate and the transmission/reception is switched. Moreover, on/off of the demodulation circuit 93, the transmission driver 95, and the modulation circuit 94, or the like is switched as appropriate and the power at the time of communication or stand-by is managed.

The interface unit 97 is an arithmetic operation unit that performs various types of arithmetic processing. For example, the human body communication processing with the other devices or processing depending on its communication contents is executed as appropriate.

For example, the communication signal output from the human body communication unit 218 passes through the diplexer 201 and is output to the antenna unit 212. Moreover, a communication signal received by the antenna unit 212 from another device passes through the diplexer 201 and is input to the human body communication unit 218.

In this manner, a power signal having a frequency lower than the frequency of the communication signal output from the signal generation circuit 213 is applied to the antenna unit 212 via the diplexer 201 even during a period of transmitting/receiving the communication signal. This can achieve the power transmission and the human body communication at the same time.

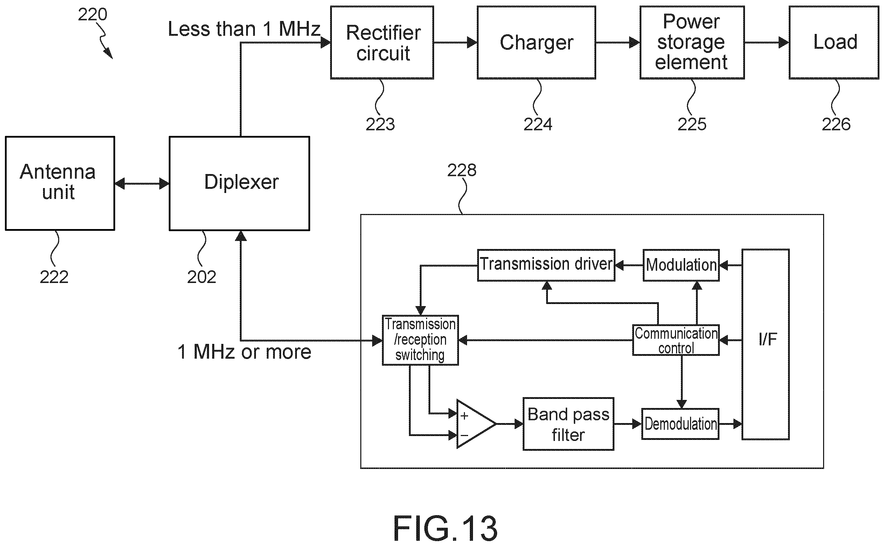

Fig. 13 is a block diagram showing functional configuration examples of the power reception device that performs human body communication 220.

The power reception device 220 includes an antenna unit 222, a diplexer 202, a rectifier circuit 223, a charger 224, a power storage element 225, a load 226, and a human body communication unit 228.

This configuration is a configuration combining the power reception device 20 shown in Fig. 1 with the human body communication unit 228 via the diplexer 202. It should be noted that the human body communication unit 228 may be configured as the load 226 driven by the power storage element 225.

A main terminal of the diplexer 202 is connected to the antenna unit 222 (third antenna conductor 33). Moreover, one sub-terminal is connected to the rectifier circuit 223 and the other sub-terminal is connected to the human body communication unit 228. A path connecting the antenna unit 222 and the rectifier circuit 223 is a path that allows frequency components lower than the threshold frequency (e.g., 1 MHz) of the diplexer 202 to pass. Moreover, a path connecting the antenna unit 222 and the human body communication unit 228 is a path that allows frequency components equal to or higher than the threshold frequency of the diplexer 202 to pass.

For example, the communication signal output from the human body communication unit 228 passes through the diplexer 202 and is output to the antenna unit 222. Moreover, a communication signal another device received by the antenna unit 222 passes through the diplexer 202 and is input to the human body communication unit 228.

In this manner, a signal having a frequency lower than the threshold frequency received by the antenna unit 222 is input to the rectifier circuit 223 as the power even during a period of transmitting/receiving the communication signal. As described above, the frequency of the power signal output from the power transmission device 210 is set to be lower than the threshold frequency. Thus, the rectifier circuit 223 can receive the AC power depending on the power signal. This can achieve the power reception and human body communication at the same time.

Hereinabove, the case where performs human body communication the power transmission device 210 and the power reception device 220 are configured as the separate devices has been described. In addition, a device (power transmission/reception device) that has both the power transmission function and the power reception function and performs human body communication may be configured.

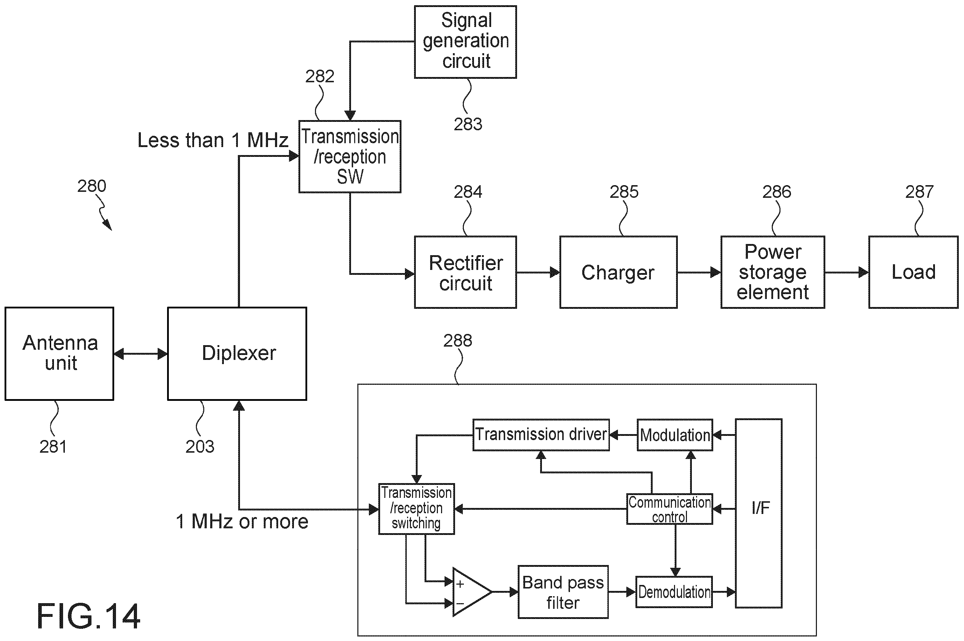

Fig. 14 is a block diagram showing functional configuration examples of the power transmission/reception device that performs human body communication. A power transmission/reception device 280 includes an antenna unit 281, a diplexer 203, a transmission/reception switching switch 282, a signal generation circuit 283, a rectifier circuit 284, a charger 285, a power storage element 286, a load 287, and a human body communication unit 288.

This configuration is a configuration combining the power transmission/reception device 80 shown in Fig. 10 with the human body communication unit 288 via the diplexer 203. It should be noted that the human body communication unit 288 may be configured as the load 287 driven by the power storage element 286.

A main terminal of the diplexer 203 is connected to the antenna unit 281 (first antenna conductor 31). Moreover, one sub-terminal is connected to the transmission/reception switching switch 282 and the other sub-terminal is connected to the human body communication unit 288. A path connecting the antenna unit 281 and the transmission/reception switching switch 282 is a path that allows frequency components lower than the threshold frequency (e.g., 1 MHz) of the diplexer 203 to pass. Moreover, a path connecting the antenna unit 281 and the human body communication unit 288 is a path that allows frequency components equal to or higher than the threshold frequency of the diplexer 203 to pass.

For example, in a case of transmitting the power depending on the power signal, the transmission/reception switching switch 282 connects the diplexer 203 and the signal generation circuit 283. In this case, the power signal output from the signal generation circuit 283 passes the transmission/reception switching switch 282 and the diplexer 203 and is applied to the antenna unit 281.

Moreover, in a case of receiving the power via the antenna unit 281, the transmission/reception switching switch 282 connects the diplexer 203 and the rectifier circuit 284. In this case, a signal lower than the threshold frequency of the diplexer 203 of the signal received from the antenna unit 281 passes the diplexer 203 and the transmission/reception switching switch 282 and is input to the rectifier circuit 284.

The power storage element 286 is charged with the signal rectified by the rectifier circuit 284 via the charger 285. It should be noted that the charger 285 may be used as a power supply source of the human body communication unit 288. In this case, the human body communication unit 288 is directly driven by using the power received by the antenna unit 281. This enables the human body communication unit 288 to be driven in conjunction with the contact operation of the human body 2.

Moreover, the communication signal output from the human body communication unit 288 passes through the diplexer 203 and is output to the antenna unit 281. Moreover, a communication signal from another device received by the antenna unit 281 passes through the diplexer 203 and is input to the human body communication unit 288.

In this manner, the power signal output from the signal generation circuit 283 can be applied to the antenna unit 281 or a power signal having a frequency lower than the threshold frequency, which is received by the antenna unit 281, can be input to the rectifier circuit 284 even during a period of transmitting/receiving the communication signal. This can achieve the power transmission/reception and the human body communication at the same time.

In the example shown in Figs. 12, 13, and 14, the configuration in which the antenna units (the antenna unit 212, the antenna unit 222, and the antenna unit 281) used for transmitting/receiving the power is shared by the human body communication units (the human body communication unit 218, the human body communication unit 228, and the human body communication unit 288) has been described. The present technology is not limited thereto. For example, the antenna unit used for transmitting/receiving the power and the antenna unit used by the human body communication unit for the human body communication may be configured separately. Also in such a case, setting the frequency of the power signal to be lower than the frequency for the human body communication can achieve the power transmission/reception and the human body communication at the same time.

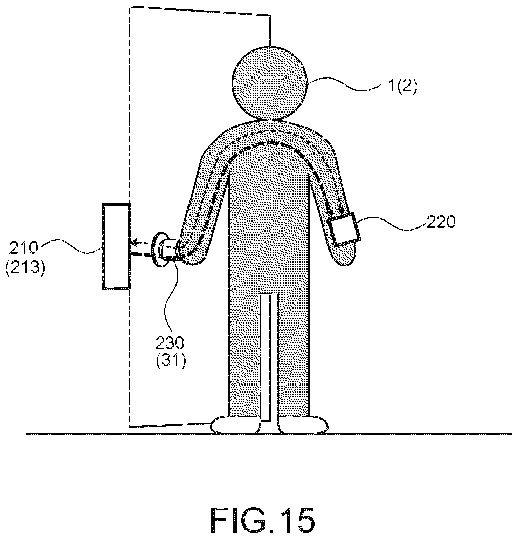

Fig. 15 is a schematic diagram showing an application example of the power transmission/reception involving the human body communication. Here, the power transmission/reception and the human body communication are performed between the stationary power transmission device 210 provided on the site with which the user 1 is brought into contact and the portable power reception device 220 attached to the user 1. It should be noted that either one or both of the power transmission device 210 and the power reception device 220 may be configured as the power transmission/reception device 280.

In the example shown in Fig. 15, authentication processing for the user 1 is performed using the human body communication for unlocking a door. In this case, the conductor electrode (first antenna conductor 31) of the power transmission device 210 is configured as a door knob 230 that the user 1 grasps and the main body of the power transmission device 210 is embedded in the periphery of the door knob 230 (first antenna conductor 31) or another place. Moreover, the power reception device 220 is configured as a device that transmits an ID or the like of the user 1 in accordance with a request from the power transmission device 210.

For example, when the user 1 touches the door knob 230 (first antenna conductor 31), the power transmission device 210 (signal generation circuit 213) applies a power signal on the door knob 230 (first antenna conductor 31). As a result, AC power depending on the power signal is generated in the human body 2 of the user 1. The power reception device 220 starts by receiving the AC power via the human body 2. Then, information about the ID or the like of the user 1 is sent from the power reception device 220 by the human body communication. The power transmission device 210 (signal generation circuit 213) has received this information compares data registered in advance with the ID information and performs the authentication processing for the user 1. Then, in a case where the user 1 is determined to be a registered person, the door is unlocked.

In this manner, a system or the like for automatically unlocking the door only by the user 1 touching the door knob 230 (first antenna conductor 31) can be achieved owing to the combination of the human body communication with the power transmission. Moreover, since the power is transmitted via the human body 2, the authentication processing can be appropriately performed for example even in a case where the power reception device 220 has no cell. This can achieve, for example, a light-weight compact authentication device or the like on which no cell and the like are mounted.

### <Third Embodiment>

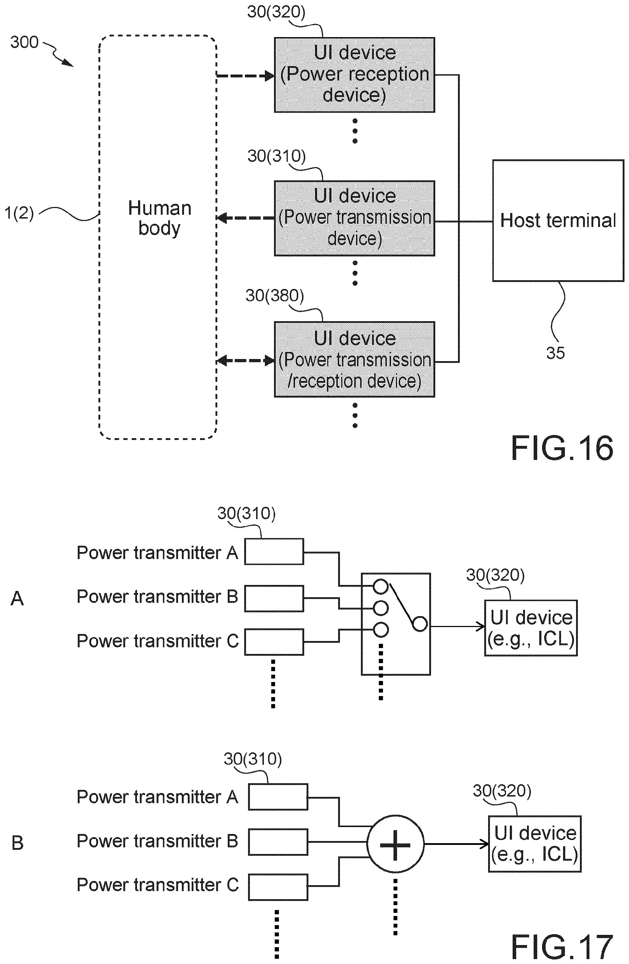

Fig. 16 is a block diagram showing a configuration example of a power transmission/reception system according to a third embodiment. Fig. 16 schematically shows a flow of power with the dotted arrows.

A power transmission/reception system 300 includes a UI device 30 (power transmission device 310 or power transmission/reception device 380) including a power transmitter that transmits the power via the human body 2 and a UI device 30 (power reception device 320 or power transmission/reception device 380) including a power receiver that receives the power via the human body 2.

The power transmission/reception system 300 includes at least one of the UI device 30 including the power transmitter and the UI device 30 including the power receiver. For example, the power transmission/reception system 300 is configured as any one of a system including at least a power transmission device 310 and a power reception device 320, a system including at least a power transmission device 310 and a power transmission/reception device 380, a system including at least a power transmission/reception device 380 and a power reception device 320, and a system including at least two or more power transmission/reception devices 380.

Moreover, the power transmission/reception system 300 has a host terminal 35.

The host terminal 35 may be configured as any one UI device 30 that transmits/receives power or may be configured as a terminal device without the power transmission/reception function.

In the power transmission/reception system 300, the host terminal 35 controls each operation of the UI device 30 including the power transmitter. That is, the host terminal 35 controls power transmission of at least one power transmitter constituting the power transmission/reception system 300.

It should be noted that in a case where the host terminal 35 is configured as the UI device 30 (power reception device 320 or power transmission/reception device 380) that receives power, a power supply (cell) different from the power supply (cell) the power receiver may be provided for the host terminal 35 using power.

In the present embodiment, the host terminal 35 corresponds to the controller.

Specifically, the host terminal 35 sets on/off of the power signal output from the power transmitter in accordance with a status of the UI device 30 including at least one of the power transmitter or the power receiver or a status of the human body 2.

Here, examples of the status of the UI device 30 include a use status, a communication status, and a status of the remaining battery of the cell of each UI device 30. The host terminal 35 acquires information indicating the status of each UI device 30 as appropriate by communicating with the UI device 30.

Moreover, examples of the status of the human body 2 include an attitude of the user 1, an environment where the user 1 is located, and a moving status of the user 1. The host terminal 35 acquires information indicating the status of the human body 2 as appropriate by using a sensor provided in the main body of the host terminal 35, a sensor provided in each UI device 30, or the like.

For example, the host terminal 35 determines a time to transmit power on the basis of the information indicating the statuses of the UI device 30 and the human body 2. Moreover, the host terminal 35 selects the power transmitter (UI device 30) used for power transmission. Then, the host terminal 35 generates a control signal to control on/off of the power signal from each power transmitter (signal generation circuit) on the basis of these results. This enables necessary power to be supplied at a suitable time.

Examples of the UI device 30 including the power transmitter or the power receiver includes a portable terminal such as a smartphone, a tablet terminal, and a mobile battery and a wearable device worn and used by the user 1 such as a watch-type device, a headphones-type device, a contact lens-type device (e.g., intelligent contact lens (ICL)), and a ring-type device.

It should be noted that since the contact lens-type device or the ring-type device has a very small size, the contact lens-type device or the ring-type device is configured as a reception-dedicated UI device 30, for example.

Moreover, a stationary device such as a device provided in a PC, an electronic instrument, a training device, an automobile, a game controller, a pillow, and a blanket may be used as the UI device 30. Such a stationary device typically includes a power transmitter.

Fig. 17 is a schematic diagram showing an operation of the power transmission/reception system 300 shown in Fig. 16.

Fig. 17A and Fig. 17B schematically show relationships representing power transmission/reception via the human body 2 between the UI device 30 (power transmission device 310) including the power transmitter and the UI device 30 (power reception device 320) including the power receiver. Examples of the UI device 30 (310) including the power transmitter include a watch-type device. Moreover, examples of the UI device 30 (320) including the power receiver include an ICL and a ring-type device.

Hereinafter, the UI device 30 configured as the power transmission device 310 will be referred to as the UI device 30 (310), the UI device 30 configured as the power reception device 320 will be referred to as the UI device 30 (320), and the UI device 30 configured as the power transmission/reception device 380 will be referred to as the UI device 30 (380).

Each figure shows a device including a power transmitter A, a power transmitter B, a power transmitter C, etc. as the UI device 30 (310) including the power transmitter.

It should be noted that the UI device 30 (380) configured as the power transmission/reception device 380 may be used instead of the UI device 30 (310) including the power transmitter and the UI device 30 (320) including the power receiver.

In Fig. 17A, the UI device 30 (310) including the power transmitter is used, switched in accordance with the status. The host terminal 35 is selected as a device to which, for example, the UI device 30 (310) having high remaining battery or the UI device 30 (310) that has not been used preferentially transmits power. Moreover, a device close to a device that receives power may be selected as a device that transmits power.

In addition, processing of switching the device that transmits power to the stationary UI device 30 (310) may be performed when the user 1 touches a stationary UI device 30 (310) (e.g., a PC or game controller).

In Fig. 17B, a plurality of UI devices 30 (310) including power transmitters transmits power. In this case, the power transmitted from the plurality of devices is combined. For example, in a case where a cell (e.g., power storage element) of a device that receives power has a low remaining battery or the power consumption has increased, the plurality of UI devices 30 (310) is selected as devices that transmits power. This enables sufficient power to be supplied via the human body 2.

In addition, in a case where the power reception efficiency is low, a device that transmits power may be added gradually.

Combining the operations shown in Fig. 17A and Fig. 17B as appropriate in this manner can achieve power transmission appropriate for a situation.

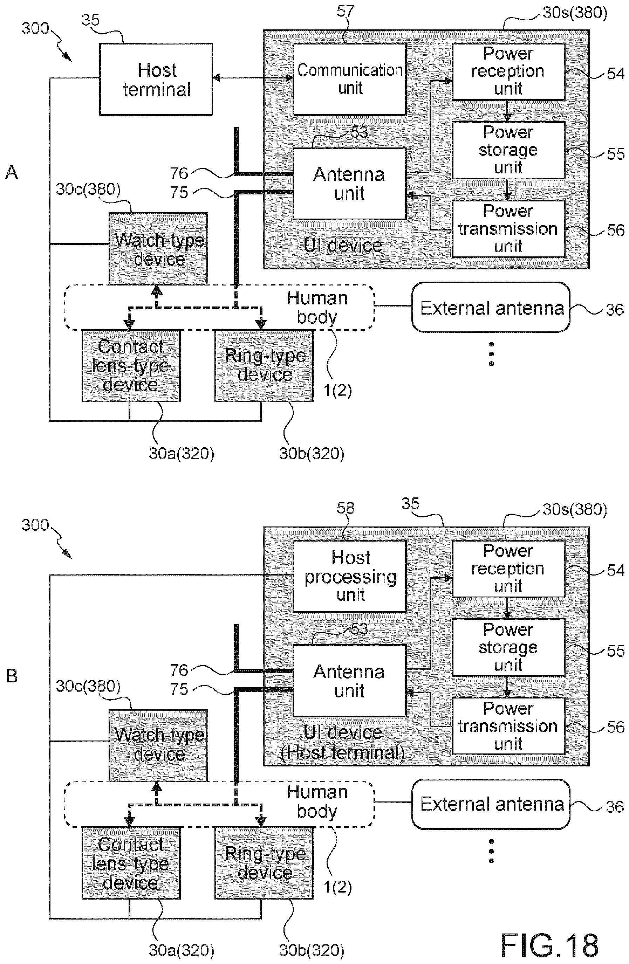

Fig. 18 is a block diagram showing an application example of the power transmission/reception system 300.

The power transmission/reception system 300 shown in Fig. 18A includes a contact lens-type device 30a, a ring-type device 30b, a watch-type device 30c, a UI device 30s for power feed, and a host terminal 35. Moreover, an external antenna 36 is connected to the human body 2.

The contact lens-type device 30a is a UI device 30 used in contact with an eye of the user 1. The ring-type device 30b is a UI device 30 used in contact with a finger of the user 1. The watch-type device 30c is a UI device 30 used in contact with an arm (wrist) of the user 1. The devices 30a, 30b, and 30c are respectively configured to include any one of the power reception function, the transmission function, and the transmission/reception function.

Here, the contact lens-type device 30a and the ring-type device 30b are configured as a power reception dedicated UI device 30 (power reception device 320). Moreover, the watch-type device 30c is configured as a UI device 30 (power transmission/reception device 380) capable of power transmission/reception.

A UI device 30s is a device configured as the power transmission/reception device 380 and includes an antenna unit 53, a power reception unit 54, a power storage unit 55, a power transmission unit 56, and a communication unit 57. Here, it is assumed that the UI device 30s (380) supplies power the other UI devices 30 (the contact lens-type device 30a (320), the ring-type device 30b (320), and the watch-type device 30c (380)) in contact with the human body 2.

The antenna unit 53 includes a first common antenna conductor 75 and a second common antenna conductor 76. The first common antenna conductor 75 is an antenna conductor used in contact with the human body 2 or the second common antenna conductor 75 is an antenna conductor capacitively coupled to the earth ground 4 without being brought into contact with the human body 2.

Moreover, the antenna unit 53 is used as an antenna shared by the power reception unit 54 and the power transmission unit 56. For example, in a case of transmitting power, the first common antenna conductor 75 functions as the first antenna conductor 31 and the second common antenna conductor 76 functions as the second antenna conductor 32. Moreover, in a case of receiving power, the first common antenna conductor 75 functions as the third antenna conductor 33 and the second common antenna conductor 76 functions as the fourth antenna conductor 34.

The power reception unit 54 functions as an electric generation device that takes power from the human body 2 via the antenna unit 53. In the UI device 30s (380), the antenna unit 53 and the power reception unit 54 constitute a power receiver.

The power storage unit 55 is a power storage element (e.g., cell) for storing power received by the power reception unit 54. The power stored in the power storage unit 55 is output to the power transmission unit 56.

The power transmission unit 56 functions as a power supply device that transmits power to the other UI devices 30 in contact with the human body 2 via the antenna unit 53. In the UI device 30s (380), the antenna unit 53 and the power transmission unit 56 constitute a power transmitter.

The communication unit 57 communicates with the host terminal 35 and acquires a control signal to control the power transmission/reception of the UI device 30s (380). The operation (e.g., on/off of the power transmission) of the power transmission unit 56, the operation (on/off of the power reception) of the power reception unit 54, or the like is controlled in accordance with this control signal.

For example, a near-field communication unit such as BLE and Zigbee or a human body communication unit is used as the communication unit 57.

The host terminal 35 controls the power transmission of the UI device 30s (380). For example, the host terminal 35 controls on/off of the power transmission unit 56 in accordance with statuses of the other UI devices 30 (e.g., use status, communication status, remaining battery of the cell) and statuses of the human body 2 (e.g., attitude, environment, and operation of the user 1). Moreover, the host terminal 35 may control on/off of the power transmission in accordance with a request from the other UI devices 30.

Moreover, the host terminal 35 may control on/off of the power transmission function of a device other than the UI device 30s (380). Here, the host terminal 35 controls the power transmission of the watch-type device 30c (380) having the power transmission/reception function as appropriate.

In addition, the host terminal 35 may control on/off of the power reception function of each device including the UI device 30s (380). For example, the power reception function is set to be off to the device that transmits power or a sufficiently charged device. In contrast, the power reception function is set to be on to a device that needs power. This make it possible to selectively feed the device that needs power with power, and the power loss can be reduced.

Moreover, the host terminal 35 reads data measured by sensors mounted on the UI device 30s (380), the contact lens-type device 30a (320), the ring-type device 30b (320), and the watch-type device 30c (380). For example, the host terminal 35 reads data about pulse rate, body temperature, blood oxygen level, and the like of the user 1 as appropriate. Such data may be provided to an application for monitoring statuses of the user 1 or the like or may be output to another device such as a PC.

The host terminal 35 is configured as the device having the independent power supply (a cell such as a battery or a fixed power supply) may be a device using the power storage unit 55 of the UI device 30s as the power supply, for example.

The external antenna 36 is an antenna attached to the human body 2.

For example, the external antenna 36 is configured as the second common antenna conductor 76 of the antenna unit 53 of the UI device 30s (380). In this case, the external antenna 36 functions as an antenna capacitively coupled to the earth ground 4, not held in direct contact with the human body 2. This can enhance the power reception efficiency of the UI device 30s

(380) . Moreover, the external antenna 36 may be configured as the first common antenna conductor 75. In this case, the external antenna 36 functions as an antenna held in direct contact with the human body 2. This can enhance the power transmission efficiency of the UI device 30s (380).

Moreover, the external antenna 36 may be configured as an independent antenna that does not connect to the UI device 30s (380). In this case, for example, the function of the human body 2 as the antenna can be extended, which can enhance the power reception efficiency.

It should be noted that a plurality of external antennas 36 may be attached to the human body 2 or no external antenna 36 may be attached to the human body 2.

The power transmission/reception system 300 shown in Fig. 18B includes a UI device 30s for power feed (380), a contact lens-type device 30a (320), a ring-type device 30b (320), and a watch-type device 30c

(380) . The UI device 30s (380) of them includes a host processing unit 58 that performs processing similar to the host terminal 35 shown in Fig. 18A. In this case, the host processing unit 58 communicates with the other UI devices 30 via a communication unit (not shown) and controls the power transmission or the like of the UI device 30s (380).

Accordingly, the UI device 30s (380) functions as the host terminal 35. In this manner, the host terminal 35 may be configured as a device having the power transmission function and the power reception function.

It should be noted that for example, in a case where the host processing unit 58 (host terminal 35) consumes high power, the host processing unit 58 (host terminal 35) may include a power supply (e.g., cell) for operating the host processing unit 58 in addition to the power storage unit 55 of the UI device 30s.

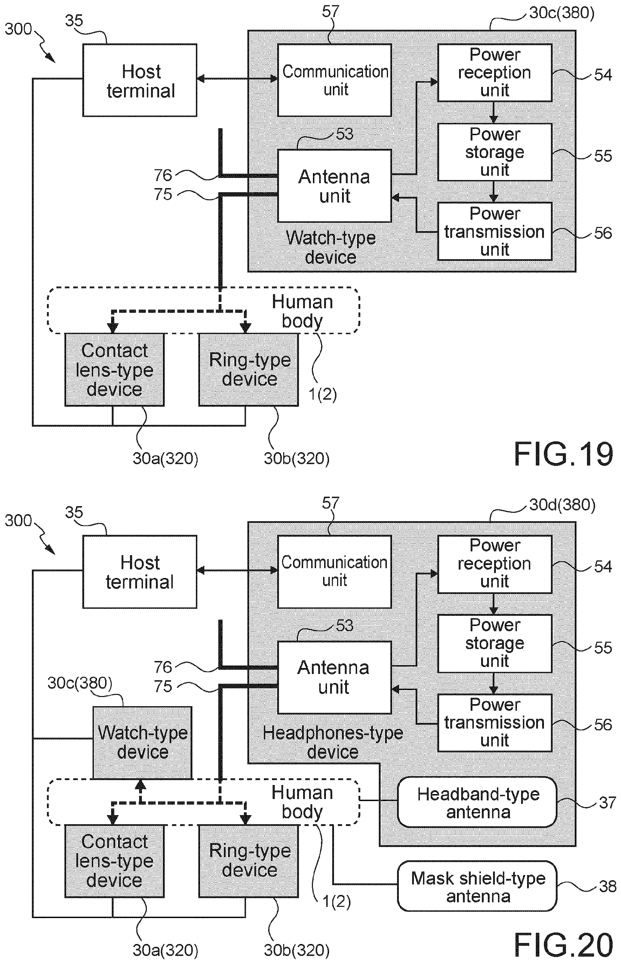

Fig. 19 is a block diagram showing another application example of the power transmission/reception system 300.

The power transmission/reception system 300 shown in Fig. 19 includes a contact lens-type device 30a (320), a ring-type device 30b (320), a watch-type device 30c (380), and a host terminal 35. The configuration shown in Fig. 19 is a configuration in which the watch-type device 30c (380) transmits power instead of the UI device 30s (380) shown in Fig. 18A.

The watch-type device 30c (380) includes an antenna unit 53, a power reception unit 54, a power storage unit 55, a power transmission unit 56, and a communication unit 57. The antenna unit 53 is an antenna shared by the power reception unit 54 and the power transmission unit 56. Moreover, the communication unit 57 acquires a control signal to control the operations of the power reception unit 54 and the power transmission unit 56 from the host terminal 35 provided separately from the watch-type device 30c (380).

For example, a device such as a smartphone is used as the host terminal 35.

The host terminal 35 transmits power from the power transmission unit 56 of the watch-type device 30c (380), for example, at a time when the contact lens-type device 30a (320) and the ring-type device 30b (320) are used. Alternatively, the host terminal 35 may transmit power at a time when the contact lens-type device 30a (320) and the ring-type device 30b (320) are not performing communication or the like. In addition, processing or the like of transmitting power in a case where the remaining battery of the cell of each device has lowered may be performed.

It should be noted that the watch-type device 30c (380) may be configured as the host terminal 35 as in the UI device 30s (380) shown in Fig. 18B.

Fig. 20 is a block diagram showing another application example of the power transmission/reception system 300.

The power transmission/reception system 300 shown in Fig. 20 includes a contact lens-type device 30a (320), a ring-type device 30b (320), a watch-type device 30c (380), a headphones-type device 30d (380), and a host terminal 35. The configuration shown in Fig. 20 is a configuration in which the headphones-type device 30d (380) transmits power instead of the UI device 30s (380) shown in Fig. 18A.

The headphones-type device 30d includes an antenna unit 53, a power reception unit 54, a power storage unit 55, a power transmission unit 56, a communication unit 57, and a headband-type antenna 37.

Moreover, it is assumed that the user 1 wears a mask shield-type antenna 38.

In this case, the headband-type antenna 37 and the mask shield-type antenna 38 both function as the external antenna 36.

For example, the headband-type antenna 37 and the mask shield-type antenna 38 are configured as the second common antenna conductor 76 capacitively coupled to the earth ground 4 in the headphones-type device 30d (380). This can enhance the power reception efficiency.

Moreover, the headband-type antenna 37 and the mask shield-type antenna 38 may be configured as the first common antenna conductor 75 in direct contact with the human body 2 in the headphones-type device 30d (380). This can enhance the power transmission efficiency.

Moreover, the headband-type antenna 37 and the mask shield-type antenna 38 may be configured as an independent antenna that does not connect to the headphones-type device 30d (380). Accordingly, the function of the human body 2 as the antenna can be extended, which can enhance the power reception efficiency.

In addition, the headband-type antenna 37 and the mask shield-type antenna 38 may be configured as appropriate to function as the external antenna 36 attached to the human body 2.

In the headphones-type device 30d (380), power received by the power reception unit 54 via the human body 2 or power received by the headband-type antenna 37 and the mask shield-type antenna 38 are supplied to the power storage unit 55. Moreover, the power transmission unit 56 generates a power signal by using the power storage unit 55 as the power source and outputs the power signal to the human body 2 via the antenna unit 53.

The power depending on the power signal is supplied to the contact lens-type device 30a (320), the ring-type device 30b (320), and the watch-type device 30c (380).

In this manner, in the configuration shown in Fig. 20, the headphones-type device 30d (380) can efficiently receive power, provided with the external antenna 36 (the headband-type antenna 37 and the mask shield-type antenna 38). Moreover, the power storage unit 55 or the like with a relatively large volume can be easily mounted on the headphones-type device 30d (380) because the headphones-type device 30d (380) is sufficiently larger than the contact lens-type device 30a (320) or the like. This enables the other UI devices 30 to be supplied with sufficient power.

It should be noted that depending on the status, the device that transmits power may be switched to the watch-type device 30c (380) from the headphones-type device 30d (380). For example, in a case where the watch-type device 30c (380) and the ring-type device 30b (320) are attached to the same hand, the ring-type device 30b (320) is fed with power by using the watch-type device 30c (380) located nearby. Similarly, the contact lens-type device 30a (320) is fed with power by using the headphones-type device 30d (380) located nearby. This allows efficient power supply.

In addition, processing of switching the device that transmits power in accordance with the remaining battery of the cell or the like of the headphones-type device 30d (380) and the watch-type device 30c (380) may be performed.

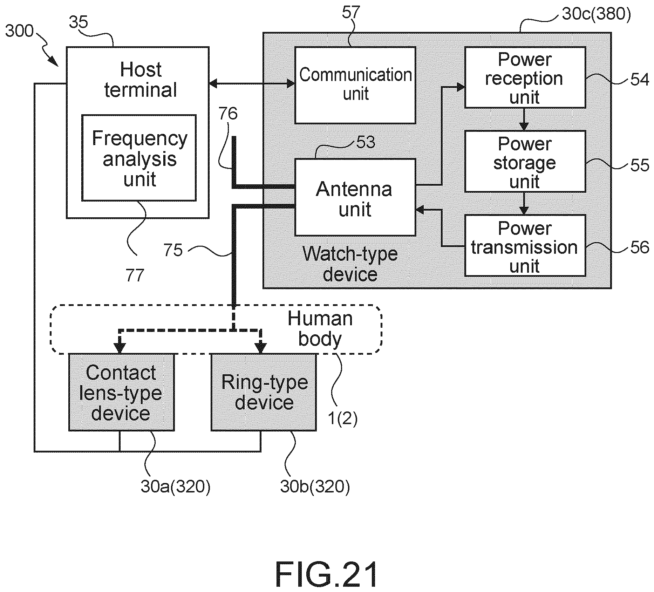

Fig. 21 is a block diagram showing another application example of the power transmission/reception system 300. In the example shown in Fig. 21, the host terminal 35 includes a frequency analysis unit 77 in addition to the configuration described above with reference to Fig. 19. It should be noted that the following description can also be applied to the configuration shown in Fig. 20.

The frequency analysis unit 77 analyzes a power waveform induced on the human body 2. Data about the power waveform is read using an AD converter or the like provided in the main body of the host terminal 35, for example. Alternatively, the data about the power waveform or the like read by the other UI devices 30 may be used.

The frequency analysis unit 77 performs high speed Fourier transform (FFT) on the data about the power waveform (an electromagnetic wave frequency received from the human body 2) and calculates a spectrum of the power waveform. A status (e.g., a distribution of frequency components) of the electric field energy applied to the human body 2 is analyzed by analyzing this spectrum.

For example, a frequency or the like at which electric charge is easily induced on the human body 2 can be monitored in real time on the basis of the spectrum of the power waveform (see Fig. 9). The host terminal 35 calculates a frequency at which electric charge is easily induced in each situation (e.g., the attitude, clothes, and the environment of the user 1) and sets the frequency as a frequency to transmit the power signal. In this manner, the host terminal 35 sets the frequency to transmit the power signal on the basis of the spectrum of the power waveform induced on the human body 2. In this case, the power signal is output at a frequency at which electric charge is easily induced on the basis of the power transmission unit 56 (power transmitter).

For example, the human body 2 has an individual difference including weight, body shape, and the like of the user 1. Therefore, an optimal frequency for power transmission to the human body 2 of the user 1 depends on each user 1. The frequency to transmit the power signal output by the power transmission unit 56 is a frequency set based on a power waveform actually generated in the human body 2. It is a frequency suitable for power transmission irrespective of an individual difference of the human body 2. This enables high-intensity power to be generated in the human body 2. Thus, the power reception efficiency can be sufficiently enhanced.

It should be noted that in a case of monitoring the power waveform, there is a possibility that the input impedance at the power reception unit 54 lowers and power taken from the human body 2 is consumed. Therefore, in a case of monitoring the power waveform, it is favorable to measure the power waveform in a short time at intervals rather than constantly measuring the power waveform. This can reduce unnecessary power consumption.

Moreover, in a case where the frequency of the power signal interferes with the frequency used for the communication (e.g., human body communication or near-field communication) with the UI device 30, there is a possibility that a communication error or the like occurs. Therefore, the host terminal 35 determines a band used for communication on the basis of the spectrum of the power waveform and sets the frequency of the power signal to avoid the band. This allows power feed without interfering with the communication.

It should be noted that the present technology is not limited to the case of changing the frequency of the power signal. For example, the frequency of the signal used for communication or the like may be changed.

Moreover, the power reception unit 54 (the power receiver) may be controlled to select a frequency that does not interfere with the frequency of the power signal output from the power transmission unit 56. In this case, for example, the frequency of the power signal is read from the spectrum of the power waveform. Then, the power reception unit 54 is controlled to receive frequency components that do not interfere with the frequency. This can avoid the interference between electric generation and power feed, and this allows efficient power supply to the UI device 30 that needs power.

### <Other Embodiments>

The present technology is not limited to the above-mentioned embodiments, and various other embodiments can be made.

In the above description, the power transmitter that transmits power via the human body and the power receiver that receives power via the human body has been mainly described. The present technology is not limited thereto, and the present technology can be applied to a conductor other than the human body. The conductor other than the human body is typically a metal object.

Here, the metal object is, for example, an object constituted by metal components, such as a casing, a frame, and a wire. The metal object includes for example various objects such as electronic devices, household appliances, automobiles, steel racks, and metal meshes.

The power transmitter includes a first antenna conductor that is brought into contact with the metal object and a second antenna conductor that is capacitively coupled to the earth ground without being brought into contact with the metal object. Moreover, the power receiver includes a third antenna conductor that is brought into contact with the metal object and a fourth antenna conductor that is capacitively coupled to the earth ground without being brought into contact with the metal object.

The power transmitter generates the power depending on the power signal in the metal object when the power signal is applied between the first and second antenna conductors. In this case, the power receiver can receive power generated in the metal object from the third and fourth antenna conductors.

In this manner, the use of the present technology enables power transmission via the metal object like the human body. Moreover, the contents described in each of the above embodiments can be read by replacing the descriptions relating to the human body by the descriptions relating to the metal object as appropriate.

At least two of the features of the present technology described above may be combined. That is, the various features described in the respective embodiments may be arbitrarily combined across the respective embodiments. Moreover, the above-mentioned various effects are merely exemplary and not limitative, and other effects may be provided.

In the present disclosure, the "same", "equal", "orthogonal", and the like are concepts including "substantially the same", "substantially equal", "substantially orthogonal", and the like. For example, conditions included in a predetermined range (e.g., ±10% range) based on "completely the same", "completely equal", "completely orthogonal", and the like are also included.

It should be noted that the present technology can also take the following configurations.
(1) A power transmitter, including:
   an antenna unit including
      a first antenna conductor used in contact with a human body unconnected to ground of earth, and
      a second antenna conductor that is capacitively coupled to the ground of the earth without being brought into contact with the human body; and
   a signal generation circuit that applies an alternating current power signal between the first antenna conductor and the second antenna conductor.
(2) The power transmitter according to (1), in which
   the first antenna conductor is a conductor electrode including at least one of gold, silver, aluminum, copper, iron, nickel, an alloy, an electrically conductive resin, or an electrically conductive rubber and is brought into contact with the human body.
(3) The power transmitter according to (2), in which
   the conductor electrode has a resin-coated surface that is brought into contact with the human body.
(4) The power transmitter according to (2) or (3), in which
   the conductor electrode is an electrode in a planer shape, a pin shape, a hemisphere shape, or a convexo-concave shape.
(5) The power transmitter according to any one of (2) to (4), is housed in a casing having a portion other than the conductor electrode, the portion being brought into contact with the human body and being constituted by an insulative member.
(6) The power transmitter according to any one of (1) to (5), in which
   the second antenna conductor is any one of a ground pattern provided in a circuit board of the power transmitter, another pattern provided in the circuit board other than the ground pattern, or an electrically conductive member provided in a portion of the casing housing the power transmitter, the portion being not brought into contact with the human body.
(7) The power transmitter according to any one of (1) to (6), in which
   the power signal is a pulse signal or a sinusoidal signal.
(8) The power transmitter according to any one of (1) to (7), in which
   the power signal is set to have a frequency at which electric charge is easily induced on the human body.
(9) The power transmitter according to any one of (1) to (8), in which
   the signal generation circuit generates the power signal in accordance with a control signal output from a controller that controls power transmission of the power transmitter.
(10) The power transmitter according to (9), in which
   the control signal is at least one of a signal specifying on/off of the power signal or a signal specifying a frequency of the power signal.
(11) The power transmitter according to any one of (1) to (10), which is mounted on either a portable device that is brought into contact with the human body or a stationary device that is brought into contact with the human body.
(12) A power transmission/reception device on which the power transmitter according to any one of (1) to (11) has been mounted, including:
   a power receiver that includes a rectifier circuit connected to the first antenna conductor and receives alternating current power generated in the antenna unit and rectified by the rectifier circuit; and
   a switching circuit that switches and connects the antenna unit to either one of the signal generation circuit and the rectifier circuit.
(13) The power transmission/reception device according to (12), further including
   a power storage element that stores power rectified by the rectifier circuit, in which
   the signal generation circuit generates the power signal by using the power storage element as a power source.
(14) A human body communication device including the power transmitter according to any one of (1) to (13), including:
   a communication unit that is connected to the antenna unit and performs human body communication; and
   a separation circuit including
      a first path that connects the antenna unit and the signal generation circuit and allows a signal having a frequency lower than a frequency for the human body communication to pass, and
      a second path that connects the antenna unit and the communication unit and allows a signal having the frequency for the human body communication to pass, in which
   the signal generation circuit generates the power signal having a frequency lower than the frequency for the human body communication.
(15) A power transmission/reception system, including:
   at least one power transmitter including
      an antenna unit including
         a first antenna conductor used in contact with a human body unconnected to ground of earth, and
         a second antenna conductor that is capacitively coupled to the ground of the earth without being brought into contact with the human body, and
      a signal generation circuit that applies an alternating current power signal between the first antenna conductor and the second antenna conductor; and
   at least one power receiver that receives power depending on an electrical signal via the human body.
(16) The power transmission/reception system according to (15), further including
   a controller that controls power transmission of the at least one power transmitter.
(17) The power transmission/reception system according to (16), in which
   the controller sets on/off of the power signal output from the power transmitter in accordance with a status of a device on which at least one of the power transmitter or the power receiver is mounted or a status of the human body.
(18) The power transmission/reception system according to (16) or (17), in which
   the controller sets the frequency of the power signal on the basis of a spectrum of a power waveform induced on the human body.

### Reference Signs List

1 user
2 human body
4 earth ground
10, 210, 310 power transmission device
11 power transmitter
12, 212 antenna unit
13, 213 signal generation circuit
31 first antenna conductor
32 second antenna conductor
35 host terminal
40 conductor electrode
44 board ground
46, 46a, 46b casing
52 conductor pattern
77 frequency analysis unit
80, 280, 380 power transmission/reception device
201, 202, 203 diplexer
218, 228, 288 human body communication unit
100, 200, 300 power transmission/reception system

## Claims

1. A power transmitter, comprising:
an antenna unit including
a first antenna conductor used in contact with a human body unconnected to ground of earth, and
a second antenna conductor that is capacitively coupled to the ground of the earth without being brought into contact with the human body; and
a signal generation circuit that applies an alternating current power signal between the first antenna conductor and the second antenna conductor.

2. The power transmitter according to claim 1, wherein
the first antenna conductor is a conductor electrode including at least one of gold, silver, aluminum, copper, iron, nickel, an alloy, an electrically conductive resin, or an electrically conductive rubber and is brought into contact with the human body.

3. The power transmitter according to claim 2, wherein
the conductor electrode has a resin-coated surface that is brought into contact with the human body.

4. The power transmitter according to claim 2, wherein
the conductor electrode is an electrode in a planer shape, a pin shape, a hemisphere shape, or a convexo-concave shape.

5. The power transmitter according to claim 2, which is housed in a casing having a portion other than the conductor electrode, the portion being brought into contact with the human body and being constituted by an insulative member.

6. The power transmitter according to claim 1, wherein
the second antenna conductor is any one of a ground pattern provided in a circuit board of the power transmitter, another pattern provided in the circuit board other than the ground pattern, or an electrically conductive member provided in a portion of the casing housing the power transmitter, the portion being not brought into contact with the human body.

7. The power transmitter according to claim 1, wherein
the power signal is a pulse signal or a sinusoidal signal.

8. The power transmitter according to claim 1, wherein
the power signal is set to have a frequency at which electric charge is easily induced on the human body.

9. The power transmitter according to claim 1, wherein
the signal generation circuit generates the power signal in accordance with a control signal output from a controller that controls power transmission of the power transmitter.

10. The power transmitter according to claim 9, wherein
the control signal is at least one of a signal specifying on/off of the power signal or a signal specifying a frequency of the power signal.

11. The power transmitter according to claim 1, which is mounted on either a portable device that is brought into contact with the human body or a stationary device that is brought into contact with the human body.

12. A power transmission/reception device on which the power transmitter according to claim 1 has been mounted, comprising:
a power receiver that includes a rectifier circuit connected to the first antenna conductor and receives alternating current power generated in the antenna unit and rectified by the rectifier circuit; and
a switching circuit that switches and connects the antenna unit to either one of the signal generation circuit and the rectifier circuit.

13. The power transmission/reception device according to claim 12, further comprising
a power storage element that stores power rectified by the rectifier circuit, wherein
the signal generation circuit generates the power signal by using the power storage element as a power source.

14. A human body communication device including the power transmitter according to claim 1, comprising:
a communication unit that is connected to the antenna unit and performs human body communication; and
a separation circuit including
a first path that connects the antenna unit and the signal generation circuit and allows a signal having a frequency lower than a frequency for the human body communication to pass, and
a second path that connects the antenna unit and the communication unit and allows a signal having the frequency for the human body communication to pass, wherein
the signal generation circuit generates the power signal having a frequency lower than the frequency for the human body communication.

15. A power transmission/reception system, comprising:
at least one power transmitter including
an antenna unit including
a first antenna conductor used in contact with a human body unconnected to ground of earth, and
a second antenna conductor that is capacitively coupled to the ground of the earth without being brought into contact with the human body, and
a signal generation circuit that applies an alternating current power signal between the first antenna conductor and the second antenna conductor; and
at least one power receiver that receives power depending on an electrical signal via the human body.

16. The power transmission/reception system according to claim 15, further comprising
a controller that controls power transmission of the at least one power transmitter.

17. The power transmission/reception system according to claim 16, wherein
the controller sets on/off of the power signal output from the power transmitter in accordance with a status of a device on which at least one of the power transmitter or the power receiver is mounted or a status of the human body.

18. The power transmission/reception system according to claim 17, wherein
the controller sets the frequency of the power signal on a basis of a spectrum of a power waveform induced on the human body.
